# EUROPEAN PATENT APPLICATION

(11) **EP 4 757 393 A1**
(43) Date of publication of application: **10.06.2026**
(21) Application number: 24886276.5
(22) Date of filing: 31.10.2024
(51) Int. Cl.: H04W 24/08, H04W 24/10, H04L 41/5067

(54) **METHOD AND APPARATUS FOR MEASURING QOE IN INACTIVE MODE AND STANDBY MODE IN WIRELESS COMMUNICATION SYSTEM**

(30) Priority: 01.11.2023 KR 20230149321
(71) Applicant: Samsung Electronics Co., Ltd., Suwon-si, Gyeonggi-do 16677 (KR)
(72) Inventor: JEONG, Seungbeom, Suwon-si, Gyeonggi-do 16677 (KR); JUNG, Sangyeob, Suwon-si, Gyeonggi-do 16677 (KR)
(74) Representative: Nederlandsch Octrooibureau
(86) International application number: PCT/KR2024/016873
(87) International publication number: WO 2025/095604

(57) **Abstract**

The present disclosure relates to a 5G or 6G communication system for supporting a higher data transmission rate. Specifically, the present disclosure relates to a method performed by a terminal in a wireless communication system, and the method may comprise the steps of: receiving, from a base station, a message including configuration information related to a quality of experience (QoE) measurement; and, if the configuration information includes indication information indicating whether to permit transmission of a QoE measurement report collected in a radio resource control (RRC) idle state and/or an RRC inactive state and whether to permit transmission of a QoE measurement configuration applicable to the RRC idle state and/or the RRC inactive state, transmitting, to the base station, a QoE measurement report collected in the RRC idle state and/or the RRC inactive state, and/or a QoE measurement configuration applicable to the RRC idle state and/or the RRC inactive state.

## Description

### [Technical Field]

The disclosure relates to a wireless communication system (or a mobile communication system). Specifically, the disclosure relates to a method for measuring a quality of experience (QoE) in a radio resource control (RRC) inactive mode or an RRC standby (or idle) mode in a wireless communication system (or a mobile communication system).

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, with the recent development of communication systems, the demand for methods to efficiently measure and report QoE is increasing day by day.

### [Disclosure of Invention]

### [Technical Problem]

The disclosure is to improve a QoE measurement process and, in particular, to propose a process for efficiently measuring QoE in an RRC inactive mode or an RRC idle mode state.

### [Solution to Problem]

In accordance with an embodiment of the disclosure, a method performed by a terminal in a wireless communication system may include receiving, from a base station, a message including configuration information related to a quality of experience (QoE) measurement, and, when the configuration information includes indication information indicating whether transmission of a QoE measurement report collected in a radio resource control (RRC) idle state and/or an RRC inactive state is allowed and whether transmission of a QoE measurement configuration applicable to the RRC idle state and/or the RRC inactive state is allowed, transmitting, to the base station, the QoE measurement report collected in the RRC idle state and/or the RRC inactive state and/or the QoE measurement configuration applicable to the RRC idle state and/or the RRC inactive state.

In accordance with an embodiment of the disclosure, a method performed by a base station in a wireless communication system may include transmitting, to a terminal, a message including configuration information related to a quality of experience (QoE) measurement, and, when the configuration information includes indication information indicating whether transmission of a QoE measurement report collected in a radio resource control (RRC) idle state and/or an RRC inactive state is allowed and whether transmission of a QoE measurement configuration applicable to the RRC idle state and/or the RRC inactive state is allowed, receiving, from the terminal, the QoE measurement report collected in the RRC idle state and/or the RRC inactive state and/or the QoE measurement configuration applicable to the RRC idle state and/or the RRC inactive state.

In accordance with an embodiment of the disclosure, a terminal in a wireless communication system may include a transceiver, and a controller connected to the transceiver, wherein the controller is configured to receive, from a base station, a message including configuration information related to a quality of experience (QoE) measurement, and, when the configuration information includes indication information indicating whether transmission of a QoE measurement report collected in a radio resource control (RRC) idle state and/or an RRC inactive state is allowed and whether transmission of a QoE measurement configuration applicable to the RRC idle state and/or the RRC inactive state is allowed, is configured to transmit, to the base station, the QoE measurement report collected in the RRC idle state and/or the RRC inactive state and/or the QoE measurement configuration applicable to the RRC idle state and/or the RRC inactive state.

In accordance with an embodiment of the disclosure, a base station in a wireless communication system may include a transceiver, and a controller connected to the transceiver, wherein the controller is configured to transmit, to a terminal, a message including configuration information related to a quality of experience (QoE) measurement, and, when the configuration information includes indication information indicating whether transmission of a QoE measurement report collected in a radio resource control (RRC) idle state and/or an RRC inactive state is allowed and whether transmission of a QoE measurement configuration applicable to the RRC idle state and/or the RRC inactive state is allowed, is configured to receive, from the terminal, the QoE measurement report collected in the RRC idle state and/or the RRC inactive state and/or the QoE measurement configuration applicable to the RRC idle state and/or the RRC inactive state.

### [Advantageous Effects of Invention]

According to various embodiments proposed in the disclosure, a process of measuring and reporting QoE in an RRC inactive mode and an RRC idle mode can be efficiently performed.

### [Brief Description of Drawings]

FIG. 1 illustrates a structure of a mobile communication system according to an embodiment of the disclosure.
FIG. 2 illustrates radio access state transition in a mobile communication system according to an embodiment of the disclosure.
FIG. 3 is a flowchart illustrating a procedure for configuring/reporting signaling-based QoE measurement iaccording to an embodiment of the disclosure.
FIG. 4 is a flowchart illustrating a procedure for configuring/reporting management-based QoE measurement according to an embodiment of the disclosure.
FIG. 5 is a flowchart illustrating a procedure for configuring and reporting RAN visible QoE measurement according to an embodiment of the disclosure.
FIG. 6 is a flowchart illustrating a configuration and a reporting procedure for a UE to support QoE measurement not only in a connected mode but also in an inactive mode and an idle mode according to an embodiment of the disclosure.
FIG. 7 is a block diagram illustrating an internal structure of a UE, which is applied to embodiments of the disclosure.
FIG. 8 is a block diagram illustrating a structure of a base station, which is applied to embodiments of the disclosure.
FIG. 9 illustrates a structure of a UE according to an embodiment of the disclosure.
FIG. 10 illustrates a structure of a base station according to an embodiment of the disclosure.

### [Mode for the Invention]

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

In the following description, terms referring to device elements (e.g., control unit, processor, artificial intelligence (AI) model, encoder, decoder, autoencoder (AE), and neural network (NN) model) and terms referring to data (e.g., signal, feedback, report, reporting, information, parameter, value, bit, and codeword) are illustratively used for the sake of descriptive convenience. Therefore, the disclosure is not limited by the terms as described below, and other terms referring to subjects having equivalent technical meanings may be used.

Furthermore, various embodiments of the disclosure will be described using terms used in some communication standards (e.g., the 3rd generation partnership project (3GPP)), but they are for illustrative purposes only. Various embodiments of the disclosure may also be easily applied to other communication systems through modifications.

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors.

Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters.

The elements and functions provided by the "unit" may be either combined into a smaller number of elements, or a "unit", or divided into a larger number of elements, or a "unit". Moreover, the elements and "units" may be implemented to reproduce one or more CPUs within a device or a security Furthermore, the "unit" in embodiments may include one or more processors.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) or new radio (NR) standards are used for the sake of descriptive convenience. However, the disclosure is not limited by these terms and names, and may be applied in the same way to systems that conform other standards.

In the following description, a base station (BS) is an entity that allocates resources to terminals, and may be at least one of a radio access network (RAN) node, a next generation node B (gNode B, gNB), an evolved node B (eNode B, eNB), a Node B, a wireless access unit, a base station controller, and a node on a network. In the disclosure, the term "eNB" may be interchangeably used with the term "gNB" for the sake of descriptive convenience. That is, a base station described as "eNB" may refer to "gNB".

A terminal may include a user equipment (UE), a mobile station (MS), a cellular phone, a smartphone, a computer, or a multimedia system capable of performing a communication function. Of course, examples of the base station and the terminal are not limited to those mentioned above.

In particular, the disclosure may be applied to 3GPP NR (5th generation mobile communication standard). In addition, the disclosure may be applied to intelligent services (e.g., smart homes, smart buildings, smart cities, smart cars or connected cars, healthcare, digital education, retail business, security and safety-related services, etc.) on the basis of 5G communication technology and Internet of things (IoT)-related technology. In addition, the term "terminal" may refer to not only mobile phones, NB-IoT devices, and sensors, but also any other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a terminal (or UE) transmits data or control signals to a base station (or eNB or gNB), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to an embodiment, e MBB aims at providing a data rate higher than that supported by existing LTE, LTE-A, or LTE-Pro. For example, in the 5G communication system, eMBB must provide a peak data rate of 20Gbps in the downlink and a peak data rate of 10Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and may also require a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, mMTC, URLLC, and eMBB as described above are merely an example of different types of services, and service types to which the disclosure is applied are not limited to those mentioned above.

Furthermore, in the following description, LTE, LTE-A, LTE Pro, 5G (or NR), or 6G systems will be described by way of example, but the embodiments of the disclosure may also be applied to other communication systems having similar technical backgrounds or channel types. Furthermore, based on determinations by those skilled in the art, the embodiments of the disclosure may be applied to other communication systems having similar backgrounds or channel types through some modifications without significantly departing from the scope of the disclosure.

In the following description, "a/b" may refer to "a" and/or "b".

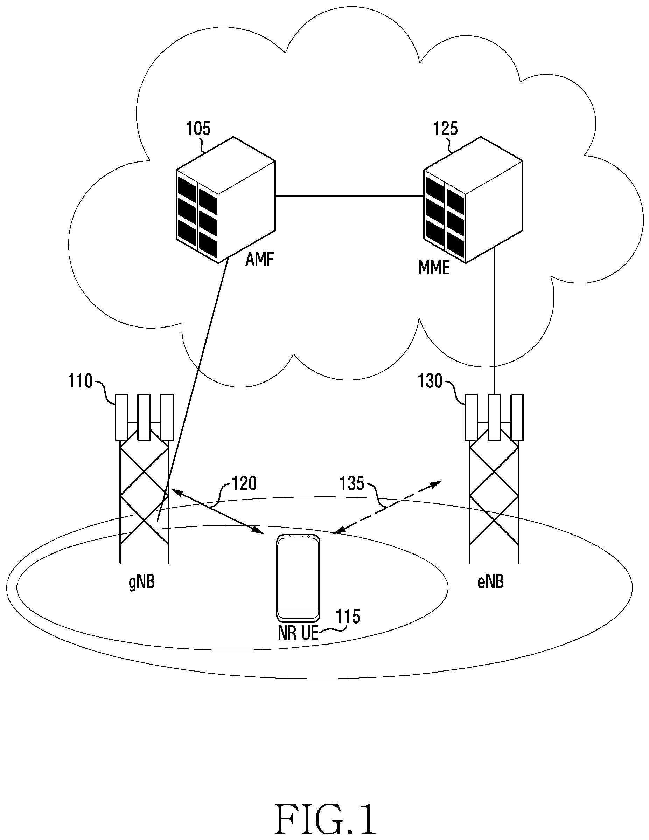

FIG. 1 illustrates a structure of a mobile communication system according to an embodiment of the disclosure.

Referring to FIG. 1, as illustrated therein, a radio access network of a mobile communication system (new radio, NR) according to an embodiment of the disclosure includes a base station (next generation Node B, hereinafter gNB) 110 and an (AMF (new radio core network) 105. A user equipment (new radio user equipment, hereinafter NR UE or terminal) 115 accesses an external network via the gNB 110 and the AMF 105. The mobile communication system according to an embodiment of the disclosure may be a next generation wireless mobile communication system, and the gNB may be a next generation radio base station.

In FIG. 1, the gNB corresponds to an evolved Node B (eNB) of a conventional LTE system. The gNB may be connected to the NR UE through a radio channel and provide outstanding services as compared to a conventional node B (120). Iin the next-generation mobile communication system according to an embodiment of the disclosure, since all user traffic is serviced through a shared channel, a device that collects state information, such as buffer statuses, available transmit power states, and channel states of UEs, and performs scheduling accordingly is required, and the gNB 110 serves as the device. In general, one gNB controls multiple cells. In order to implement ultrahigh-speed data transfer beyond the current LTE, the next-generation mobile communication system may provide a wider bandwidth than the existing maximum bandwidth, may employ an orthogonal frequency division multiplexing (hereinafter referred to as OFDM) as a radio access technology, and may additionally integrate a beamforming technology therewith. Furthermore, the next-generation mobile communication system employs an adaptive modulation & coding (hereinafter referred to as AMC) scheme for determining a modulation scheme and a channel coding rate according to a channel state of a UE.

The AMF 105 may perform functions such as mobility support, bearer configuration, and QoS configuration. The AMF is a device responsible for various control functions as well as a mobility management function for a UE, and is a connected to multiple base stations. In addition, the wireless mobile communication system according to an embodiment of the disclosure may interwork with the conventional LTE system, and the AMF may be connected to an MME 125 via a network interface. The MME is connected to an eNB 130 that is an existing base station. A UE supporting LTE-NR dual connectivity may transmit/receive data while maintaining connections to both the gNB and the eNB (135).

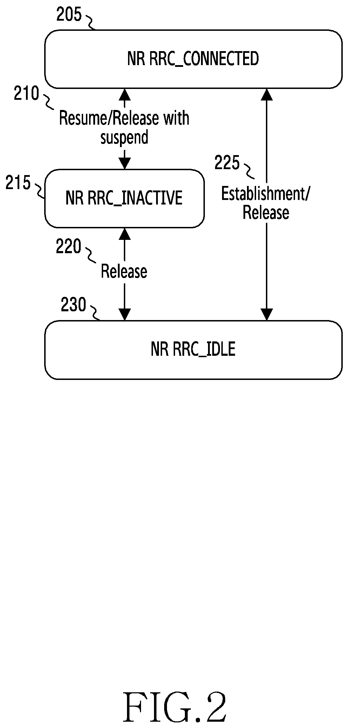

FIG. 2 illustrates radio access state transition in a mobile communication system according to an embodiment of the disclosure.

In the mobile communication system according to an embodiment of the disclosure, a UE may have three types of radio resource control (RRC) states or RRC modes. A connected mode (RRC_CONNECTED) 205 refers to a radio access state in which a UE is able to transmit/receive data. An idle mode (RRC_IDLE) 230 refers to a radio access state in which a UE monitors whether paging is transmitted to the UE. The two modes are radio access states that are also applied to the conventional LTE system, and the details thereof are the same as those of the conventional LTE system. The mobile communication system according to an embodiment of the disclosure may be a next generation mobile communication system.

In the mobile communication system according to an embodiment of the disclosure, an inactive radio access state (RRC_INACTIVE) 215 is newly defined. In this radio access state, UE context is maintained in both the base station and the UE, and radio access network (RAN)-based paging is supported. The characteristics of the above new radio access state may be enumerated as follows.
- Cell re-selection mobility;
- CN - NR RAN connection (both control plane/user plane (C/U-planes)) has been established for UE;
- The UE AS (Access Stratum) context is stored in at least one gNB and the UE;
- Paging is initiated by NR RAN;
- RAN-based notification area is managed by NR RAN;
- NR RAN knows the RAN-based notification area which the UE belongs to;

The UE in an inactive radio access state according to an embodiment of the disclosure may transition to a connected mode or a standby mode by using a specific procedure. The inactive mode transitions to the connected mode according to a resume procedure, and the connected mode transitions to the inactive mode by using a release procedure including suspend configuration information (210). This procedure is performed via one or more RRC messages transmitted and received between the UE and the base station, and includes one or more operations. Furthermore, the inactive mode may transition to the idle mode via the release procedure after the resume (220). The transition between the connected mode and the idle mode follows the conventional LTE technology. That is, the transition between the modes is performed via an establishment or release procedure.

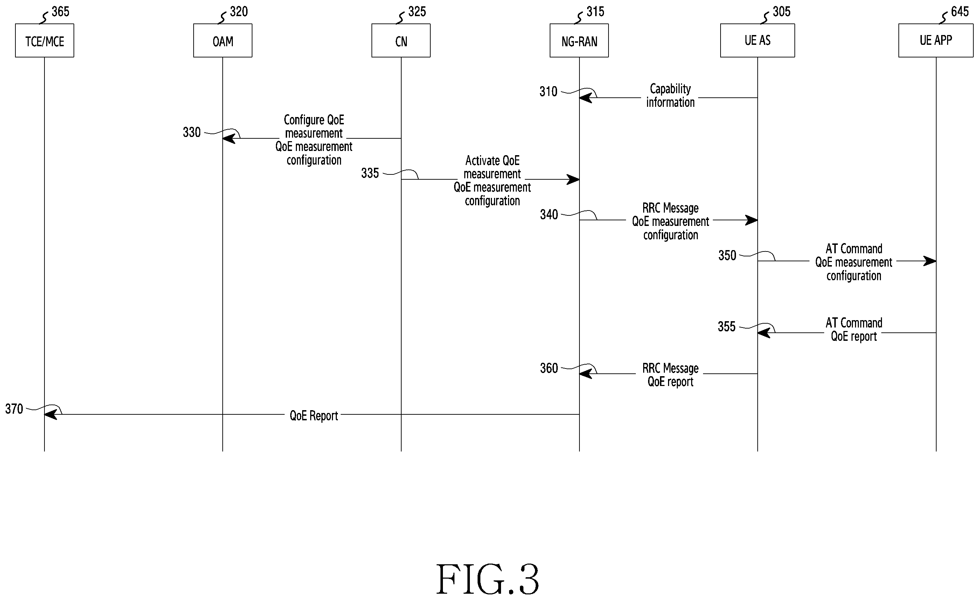

FIG. 3 is a flowchart illustrating a procedure for configuring and reporting signaling-based quality of experience (QoE) measurement according to an embodiment of the disclosure.

Referring to FIG. 3, according to an embodiment of the disclosure, an access stratum (AS) 305 of a UE may transmit, to a base station (or an NG-RAN 315), through a UE capability message (e.g., UECapabilityInformation), information (e.g., qoe-Streaming-MeasReport, qoe-MTSI-MeasReport, qoe-VR-MeasReport) indicating whether a quality of experience (QoE) measurement is supported for each type of service (e.g., streaming, multimedia telephony service for Internet protocol (IP) multimedia subsystem (IMS) (MTSI), and virtual reality (VR)) (operation 310). Before the UE transmits the UE capability message, the base station may transmit, to the UE, a message (e.g., UECapabilityEnquiry) for requesting the UE capability message. In addition, the UE may report, to the base station, whether RAN visible QoE measurement is supported for each type of service (e.g., streaming, VR) (e.g., ran-VisibleQoE-Streaming-MeasReport, ran-VisibleQoE-VR-MeasReport) through the UE capability message. In addition, the UE may report, to the base station, whether UL RRC segmentation (e.g., ul-MeasurementReportAppLayer-Seg) is supported for a QoE report message through the UE capability message. The UE capability message includes abstract syntax notation one (ASN.1) information as shown in Table 1 below, and a description of related parameters (i.e., QoE measurement parameters) is as shown in Table 2 below.

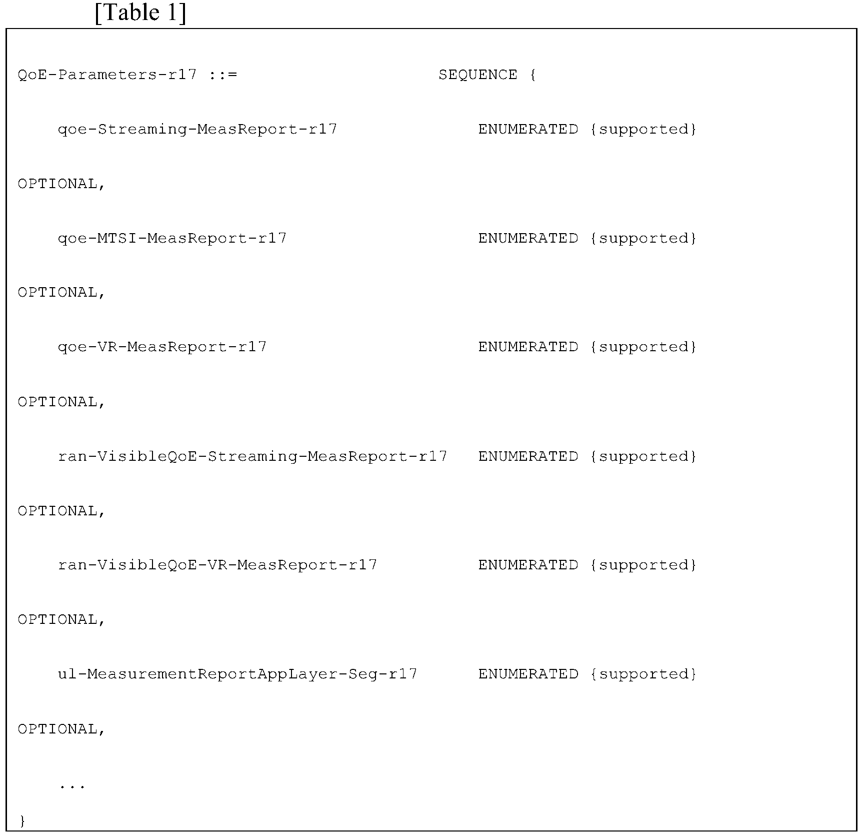

**[Table 2]**

| 4.2.20 QoE measurement parameters | | | | |
|---|---|---|---|---|
| **Definitions for parameters** | **Per** | **M** | **FDD-TDD DIFF** | **FR1-FR2 DIFF** |
| ***qoe-Streaming-MeasReport-r17*** | UE | No | No | No |
| Indicates whether the UE supports NR Q E Measurement | | | | |
| Collection for streaming services, see TS 26.247 [29]. | | | | |

| ***qoe-MTSI-MeasReport-r17*** | UE | No | No | No |
|---|---|---|---|---|
| Indicates whether the UE supports NR QoE Measurement | | | | |
| Collection for MTSI services, see TS 26.114 [30]. | | | | |

| ***qoe-VR-MeasReport-r17*** | UE | No | No | No |
|---|---|---|---|---|
| Indicates whether the UE supports NR QoE Measurement | | | | |
| Collection for VR services, see TS 26.118 [31]. | | | | |

| ***ran-VisibleQoE-Streaming-MeasReport-r17*** | UE | No | No | No |
|---|---|---|---|---|
| Indicates whether the UE supports RAN visible QoE | | | | |
| Measurement Collection for streaming services. | | | | |

| ***ran-VisibleQoE-VR-MeasReport-r17*** | UE | No | No | No |
|---|---|---|---|---|
| Indicates whether the UE supports RAN visible QoE | | | | |
| Measurement Collection for VR services. | | | | |

| ***ul-MeasurementReportAppLayer-Seg-r17*** | UE | No | No | No |
|---|---|---|---|---|
| Indicates whether the UE supports RRC segmentation of the | | | | |
| MeasurementReportAppLayer message in UL, as specified in TS 38.331 [9]. | | | | |

The types of services supported in LTE may include streaming and multimedia telephony service for IP multimedia subsystem (IMS) (MTSI), and in NR, in addition to the types of services supportable in LTE, a virtual reality (VR) service is defined as being supported in Rel-17, and it is defined that services such as multimedia broadcast multicast services (MBMS) and extended reality (XR) may be additionally supportable in a later release.

According to an embodiment of the disclosure, operations administration and maintenance (OAM) 320 may provide QoE measurement configuration information to a core network (CN) 325 (operation 330). The CN 325 that has received the configuration information may transmit the configuration information to a base station 315, thereby activating QoE measurement (operation 335).

According to an embodiment of the disclosure, the base station 315 that has received the configuration information from the CN 325 may transmit the QoE configuration information to an AS 305 of a UE through an RRC message (e.g., an RRCReconfiguration message or an RRCResume message) (operation 340). The RRC message may include an IE (APPLayerMeasConfig) as shown in Table 3 below, and a description of related parameters is as shown in Table 4 below.

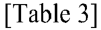

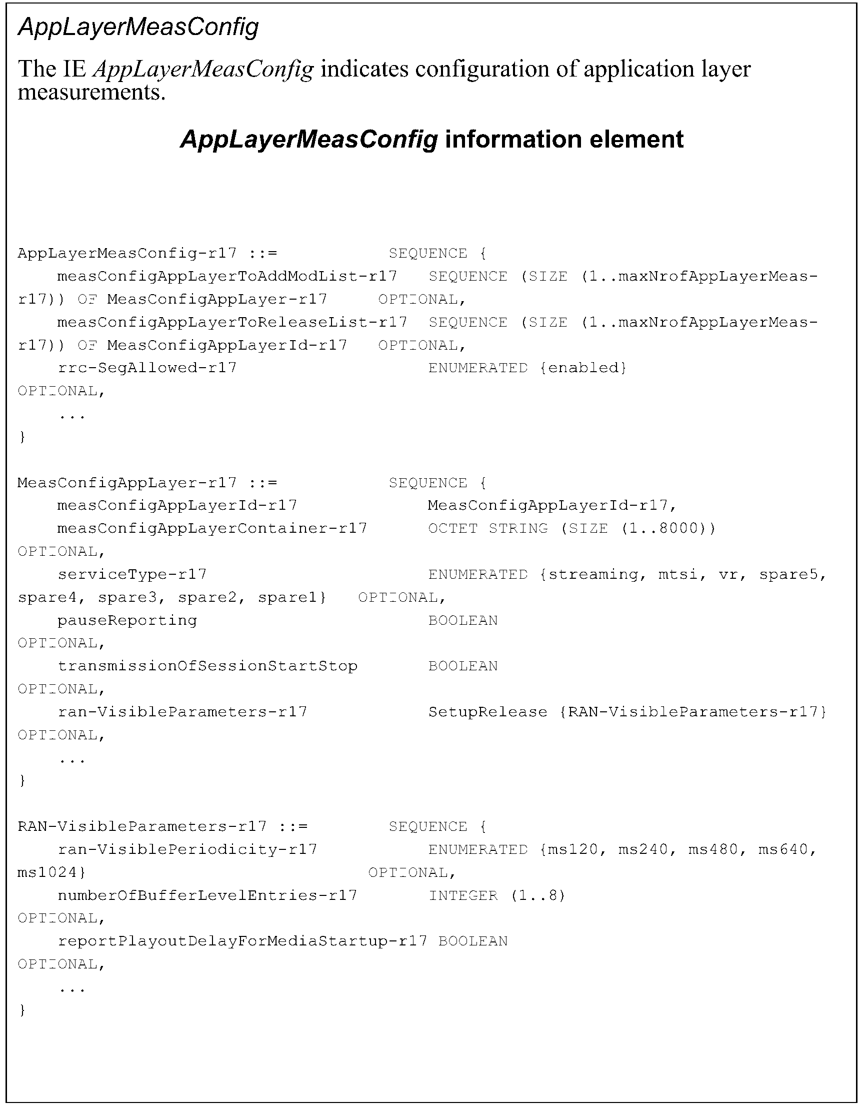

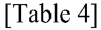

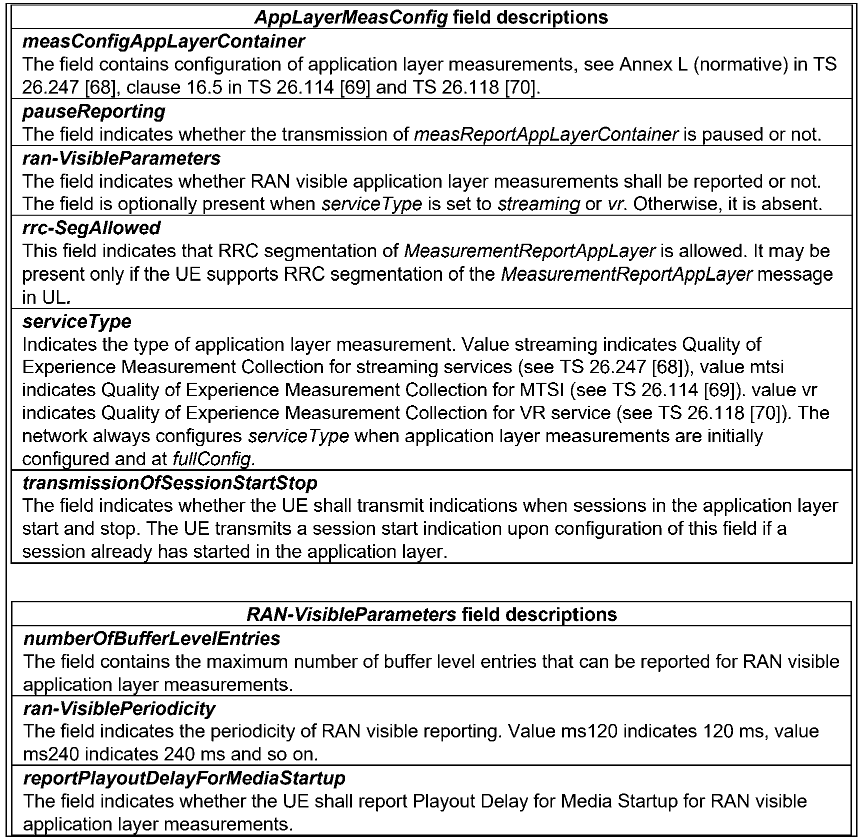

In addition, according to an embodiment of the disclosure, an operation of the UE AS 305 that has received the QoE configuration information from the base station through the RRC message may be performed as described in Table 5 below.

**[Table 5]**

| 5.3.5.13d Application layer measurement contiguration | | | |
|---|---|---|---|
| The UE shall: | | | |
| | 1> if *measConfigAppLayerToReleaseList* is included in *appLayerMeasConfig* within *RRCReconfiguration* or *RRCResume:* | | |
| | | 2> for each *measConfigAppLayerld* value included in the *measConfigAppLayerToReleaseList:* | |
| | | | 3> forward the *measConfigAppLayerld* and inform upper layers about the release of the application layer measurement configuration including any RAN visible application layer measurement configuration; |
| | | | 3> discard any application layer measurement report received from upper layers; |
| | | | 3> consider itself not to be configured to send application layer measurement report for the *measConfigAppLayerld.* |
| | 1> if *measConfigAppLayerToAddModList* is included in *appLayerMeasConfig* within *RRCReconfiguration* or *RRCResume:* | | |
| | | 2> for each *measConfigAppLayerld* value included in the *measConfigAppLayerToAddModList:* | |
| | | | 3> if *measConfigAppLayerContainer* is included for the corresponding *MeasConfigAppLayer* configuration: |
| | | | 4> forward the *measConfigAppLayerContainer,* the *measConfigAppLayerId* and the *serviceType* to upper layers considering the *serviceType;* |
| | | | 3> consider itself to be configured to send application layer measurement report for the *measConfigAppLayerld* in accordance with 5.7.16; |
| | | | 3> forward the *transmissionOfSessionStartStop,* if configured, and *measConfigAppLayerld* to upper layers considering the *serviceType;* |
| | | | 3> if *ran-VisibleParameters* is set to setup and the parameters have been received: |
| | | | 4> forward the *measConfigAppLayerId,* the *ran-VisiblePeriodicity,* if configured, the *numberOfBufferLevelEntries,* if configured, and the *reportPlayoutDelayForMediaStartup,* if configured, to upper layers considering the *serviceType;* |

| | | | |
|---|---|---|---|
| | 3> else if *ran-VisibleParameters* is set to release: | | |
| | 4> forward the *measConfigAppLayerld* and inform upper layers about the release of the RAN visible application layer measurement configuration; | | |
| | 3> if *pauseReporting* is set to *true:* | | |
| | 4> if at least one segment, but not all segments, of a segmented *MeasurementReportAppLayer* message containing an application layer measurement report associated with the *measConfigAppLayerId* has been submitted to lower layers for transmission: | | |
| | | 5> submit the remaining segments of the *MeasurementReportAppLayer* message to lower layers for transmission; | |
| | | 4> suspend submitting application layer measurement report containers to lower layers for the application layer measurement configuration associated with the *measConfigAppLayerld;* | |
| | | 4> store any previously or subsequently received application layer measurement report containers associated with the *measConfigAppLayerld* for which no segment, or full message, has been submitted to lower layers for transmission; | |
| | | 3> else if *pauseReporting* is set to *false* and if transmission of application layer measurement report containers has previously been suspended for the application layer measurement configuration associated with the *measConfigAppLayerId:* | |
| | | 4> submit stored application layer measurement report containers to lower layers, if any, for the application layer measurements configuration associated with the *measConfigAppLayerld;* | |
| | | 4> resume submitting application layer measurement report containers to lower layers for the application layer measurement configuration associated with the *measConfigAppLayerld;* | |
| | NOTE 1: The UE may discard reports when the memory reserved for storing application layer measurement reports becomes full. | | |
| | NOTE 2: The transmission of RAN visible application layer measurement reports is not paused when *pauseReporting* is set to *true.* | | |

As described above, in case of a QoE measurement configuration included in measConfigAppLayerToAddModList, an AS layer 305 of the UE may transfer part or all of the configuration information to an upper layer or an application layer of the UE (UE APP 345) through an AT command (operation 350). In addition, the AS layer 305 of the UE may send, to the UE APP 345, an AT command instructing or commanding deletion of stored configuration information regarding a QoE measurement configuration included in measConfigAppLayerToAddReleaseList.

According to an embodiment of the disclosure, the UE APP 345 may perform QoE measurement according to the received configuration information. In addition, the UE APP 345 may report a result of the measurement according to the configuration information to the UE AS 305 through an AT command (operation 355).

According to an embodiment of the disclosure, when a measurement result report is received from the UE APP, the UE AS 305 may report the measurement result to the base station 315 through an RRC message (e.g., a MeasurementReportAppLayer message) (operation 360). A signaling radio bearer (SRB) 4 may be used for reporting QoE measurement results. The MeasurementReportAppLayer message may include ASN.1 information as shown in Table 6 below, and a description of related parameters is as shown in Table 7 below.

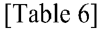

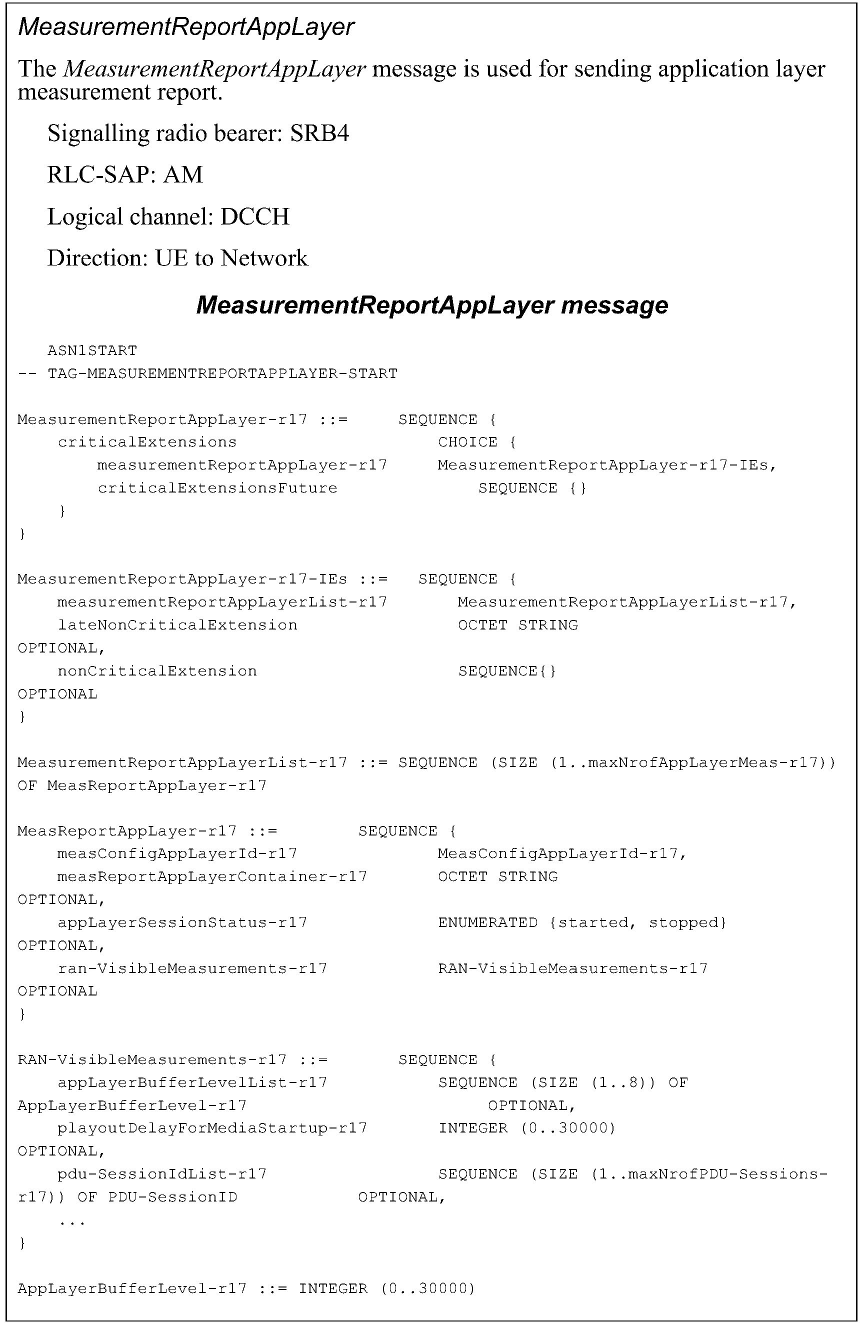

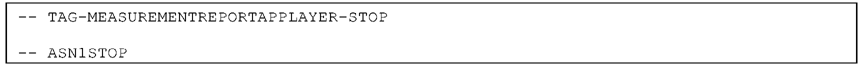

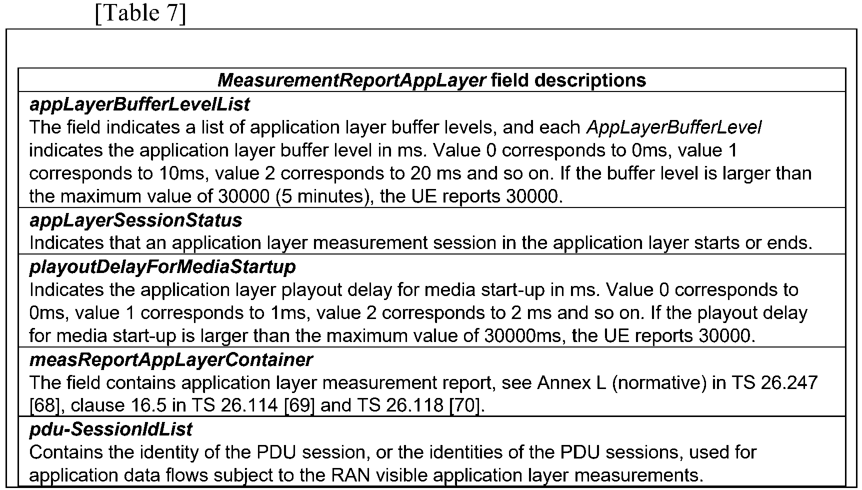

In addition, according to an embodiment of the disclosure, a specific procedure of a UE AS for reporting the measurement result may follow operations described in Table 8 below.

**[Table 8]**

| **5.7.16 Application layer measurement reporting** | | | |
|---|---|---|---|
| 5.7.16.1 General | | | |
| 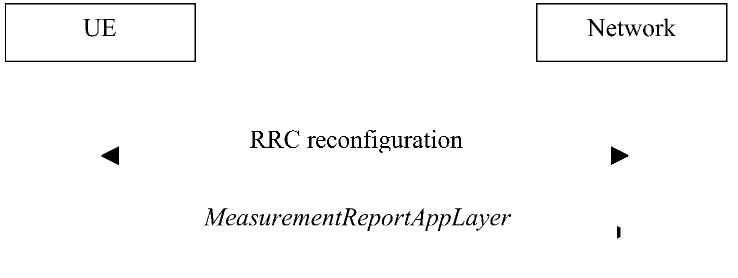 | | | |

| **Figure 5.7.16.1-1: Application layer measurement reporting** | | | |
|---|---|---|---|
| The purpose of this procedure is to send application layer measurement reports to the network. | | | |

| 5.7.16.2 Initiation | | | |
|---|---|---|---|
| A UE capable of application layer measurement reporting in RRC CONNECTED may initiate the procedure when configurec with application layer measurement, i.e. when *appLayerMeasConfig* and SRB4 have been configured by the network. | | | |

| Upon initiating the procedure, the UE shall: | | | |
|---|---|---|---|
| | 1>for each *measConfigAppLayerId*: | | |
| | | 2> if the UE AS has received application layer measurement report from upper layers which has not been transmitted; and | |
| | | 2> if the application layer measurement reporting has not been suspended for the *measConfigAppLayerId* associated with the application ayer measurement report according to clause 5.3.5.13d: | |
| | | | 3> set the *measReportAppLayerContainer* in the *MeasurementReportAppLayer* message to the received value in the application layer measurement report; |

| | | | |
|---|---|---|---|
| | 2> set the *measConfigAppLayerId* in the *MeasurementReportAppLayer* message to the value of the *measConfigAppLayerId* received together with application layer measurement report information; | | |
| | 2> if session start or stop information has been received from upper layers for the *measConfigAppLayerId:* | | |
| | | 3> set the *appLayerSessionStatus* to the received value of the application layer measurement information; | |
| | 2> if RAN visible application layer measurement report has been received from upper layers: | | |
| | | 3> for each *appLayerBufferLevel* value in the received RAN visible application layer measurement report: | |
| | | | 4> set the *appLayerBufferLevel* values in the *appLayerBufferLevelList* to the buffer level values received from the upper layer in the order with the first *appLayerBufferLevel* value set to the newest received buffer level value, the second *appLayerBufferLevel* value set to the second newest received buffer level value, and so on until all the buffer level values received from the upper layer have been assigned or the maximum number of values have been set according to *appLayerBufferLevel,* if configured; |
| | | 3> set the *playoutDelayForMediaStartup* to the received value in the RAN visible application layer measurement report, if any; | |
| | | 3> for each PDU session ID value indicated in the received RAN visible application layer measurement report, if any: | |
| | | | 4> set the *PDU-SessionID* field in the *pdu-SessionIdList* to the indicated PDU session ID value; |
| | 2> if the encoded RRC message is larger than the maximum supported size of one PDCP SDU specified in TS 38.323 [5]: | | |
| | | 3> if the RRC message segmentation is enabled based on the field *rrc-SegAllowed* received in *appLayerMeasConfig:* | |
| | | | 4> initiate the UL message segment transfer procedure as specified in clause 5.7.7; |
| | | 3> else: | |
| | | | 4> discard the RRC message; |
| | 2> else: | | |
| | | 3> submit the *MeasurementReportAppLayer* message to lower layers for transmission upon which the procedure ends. | |

According to an embodiment of the disclosure, the base station 315 may deliver the measurement result report, which is received from a UE, to a final server for collecting measurement reports (a trace collection entity (TCE) or a measurement collection entity (MCE) 365) (operation 370).

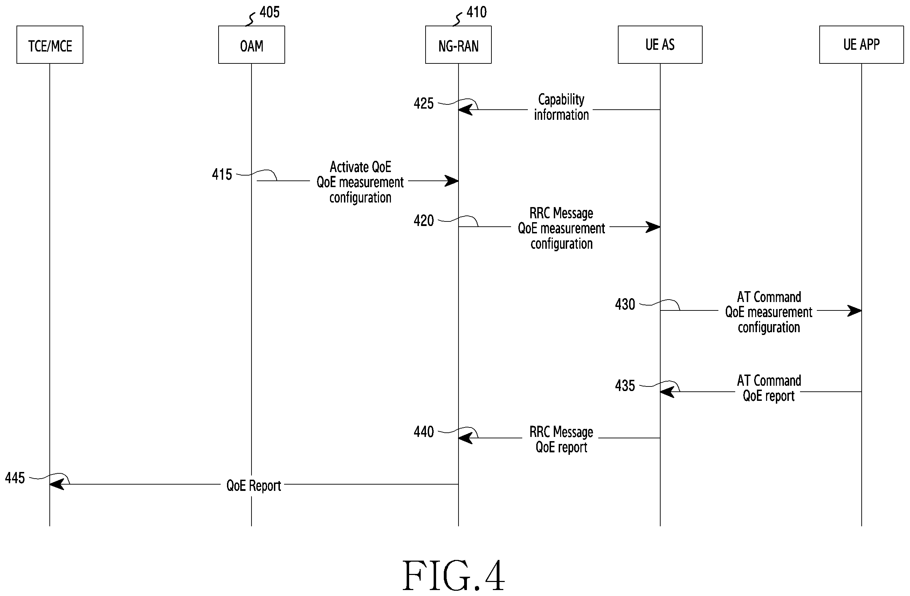

FIG. 4 is a flowchart illustrating a procedure for configuring/reporting management-based QoE measurement according to an embodiment of the disclosure.

Among operations performed in the management-based QoE configuration/reporting procedure, operations that are the same as, similar to, or duplicated with operations performed in the signaling-based QoE configuration/reporting procedure described with reference to FIG. 3 will not be separately described, and the management-based QoE configuration/reporting procedure will be described mainly focusing on differences from the signaling-based procedure with reference to FIG. 4.

According to an embodiment of the disclosure, in a scheme related to the management-based QoE configuration/reporting procedure, an OAM 405 may directly transmit a QoE measurement configuration to a base station 410 without passing through a CN, thereby instructing the base station 410 to activate QoE measurement of a UE (operation 415). The base station 410 that has received the QoE measurement configuration may search for one or more UEs that satisfy at least one condition (e.g., at least one of an area scope, an application layer capability, and a service type). The base station 410 may transmit or deliver the QoE measurement configuration to one UE among the discovered one or more UEs through an RRC message (e.g., an RRCReconfiguration message or an RRCResume message) (operation 420). Each UE that has received the RRC message may transmit and receive a configuration for QoE measurement and a measurement result between an AS layer and an APP through an AT command between the AS layer and the APP, as described above with reference to FIG. 3. An AS layer of the UE reports a measurement result obtained from the APP to the base station 410 through the RRC message, and the base station 410 may transfer the measurement result to a TCE/MCE.

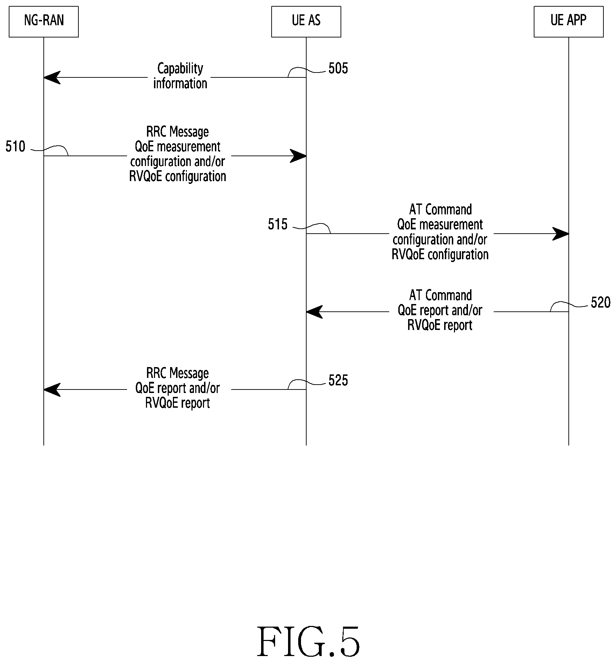

FIG. 5 is a flowchart illustrating a configuration and reporting procedure for RAN-visible QoE measurement according to an embodiment of the disclosure.

According to an embodiment of the disclosure, when following a signaling-based QoE configuration/reporting procedure and a management-based QoE configuration/reporting procedure described with reference to FIG. 3 and FIG. 4, respectively, QoE measurement is configured by OAM, a QoE measurement report generated according to the configuration is collected by a TCE/MCE, and the QoE measurement report may be used by an operator for network optimization. However, a base station may not be able to read or understand a report regarding OAM-based QoE measurement transmitted by a UE. More specifically, a measurement report generated by an application layer of the UE is included in a measurementReportAppLayerContainer of a MeasurementReportAppLayer message, but since the measurement report is stored in the form of an octet string, the base station or an RRC layer of the base station is unable to read or understand the measurement report generated by the application layer of the UE. In order to solve such a problem, that is, to allow a base station to read a QoE measurement report of a UE and use the same for network optimization such as radio resource management, a RAN-visible QoE (RVQoE) measurement has been defined and introduced in 3GPP.

According to an embodiment of the disclosure, RVQoE measurement may be defined to be limited to a specific service type (e.g., streaming, VR). A UE may report, to a base station, whether RVQoE measurement is supported for each service type (e.g., streaming, VR) (operation 505). In this case, a UECapabilityInformation message may be used. For example, the UE may include or configure, for a streaming service, a ran-VisibleQoE-Streaming-MeasReport parameter in a UECapabilityInformation message and transmit the same to the base station, and may include or configure, for a VR service, a ran-VisibleQoE-VR-MeasReport parameter in the UECapabilityInformation message and transmit the same to the base station.

According to an embodiment of the disclosure, based on whether RVQoE measurement is supported for each service type (e.g., streaming, VR) transmitted by the UE to the base station, the base station may identify whether the UE supports RVQoE measurement for each service type, and based thereon, may generate an RVQoE measurement configuration and transmit the same to the UE (operation 510). In this case, the RVQoE measurement configuration may be delivered together with an OAM-based QoE measurement configuration. The RVQoE measurement configuration may be included in an RRCReconfiguration message or an RRCResume message. The base station may indicate setup or release of RVQoE measurement to the UE through setup or release of a ran-VisibleParameters parameter in an AppLayerMeasConfig information element (IE). The ran-VisibleParameters parameter may include a RAN-VisibleParameters information element, through which some or all of the following parameters may be provided from the base station to the UE.
- RVQoE measurement report period (ran-VisiblePeriodicity): a UE AS or a UE APP may transmit an RVQoE measurement report for each corresponding period.
- Maximum number of reportable buffer levels (numberOfBufferLevelEntries): when reporting RVQoE measurement, the UE AS or the UE APP may include multiple buffer levels, and a number of buffer levels included in the RVQoE measurement report may be less than or equal to a configured value of numberOfBufferLevelEntries.
- Whether to report a playout delay at media startup (reportPlayoutDelayForMediaStartup): when a value of reportPlayoutDelayForMediaStartup is indicated as true, the UE AS or the UE APP may include a playout delay at media startup in RVQoE reporting and transmit the same. When the value of reportPlayoutDelayForMediaStartup is indicated as false, the UE may not include the playout delay at media startup in the RVQoE report.

According to an embodiment of the disclosure, an AS layer of the UE may transfer the above-described configuration information such as ran-VisiblePeriodicity to an APP layer of the UE (operation 515). In this case, the RVQoE measurement configuration may be transferred to the APP layer together with the OAM-based QoE measurement configuration. The APP of the UE may perform QoE measurement based on the RVQoE measurement configuration information to generate an RVQoE measurement report, and transmit the same to the AS layer of the UE (operation 520). In this case, the RVQoE measurement report may be transmitted to the AS layer together with the OAM-based QoE measurement report.

The AS layer of the UE that has received the RVQoE measurement report may transmit, deliver, or report the RVQoE measurement report to the base station (operation 525). In this case, the RVQoE measurement report may be transmitted, delivered, or reported to the base station together with the OAM-based QoE measurement report. In operation 525, the RVQoE measurement report may be transmitted through a RAN-VisibleMeasurements IE within a MeasurementReportAppLayer message, and the IE may include some or all of the following parameters.
- Buffer level list of App layer (appLayerBufferLevelList): the UE may include or report multiple buffer levels measured by the UE APP through this parameter. A number of buffer levels included may be limited by numberOfBufferLevelEntries among RVQoE configurations.
- Playout delay (playoutDelayForMediaStartup): the UE may include/report a playout delay at media startup through this parameter, and may indicate a value of the playout delay in units of ms. When reportPlayoutDelayForMediaStartup is configured as true in the RVQoE configuration, the UE may include this parameter in RVQoE measurement reporting.
- Pdu-SessionIdList: the UE may indicate protocol data unit (PDU) session(s) used for an application data flow to be measured for RVQoE through this parameter. After receiving the RVQoE measurement report from the UE, the base station may identify, based on this parameter, PDU session(s) for which the RVQoE values (e.g., buffer level and playout delay) were measured, and may optimize resource allocation and scheduling for the PDU session(s) indicated by this parameter, based on the identification result.

According to an embodiment of the disclosure, the base station may read the RVQoE report and perform network optimization by using the same. For example, when the base station determines, based on the RVQoE report, that a specific UE is experiencing poor QoE for a specific service, the base station may allocate a larger amount of radio resources to the UE determined to be experiencing poor QoE, thereby improving QoE of the UE determined to be experiencing poor QoE.

According to an embodiment of the disclosure, QoE configuration information (e.g., in operation 335 or 415) received by a base station may include area scope information (e.g., AreaScope). The base station may identify, by using the information, a range of an area in which a UE is to perform QoE measurement in a connected mode state. For example, when the UE moves and leaves the corresponding area scope, the base station may stop QoE measurement of the UE by releasing a QoE configuration.

According to an embodiment of the disclosure, QoE configuration information (e.g., in operation 350 or 430) received by a UE application layer (a UE APP or a UE APP) may include location range information (e.g., LocationFilter). The UE APP may identify, by using the information, a range of an area in which the UE is to perform QoE measurement. For example, when the UE APP moves and leaves the corresponding area, a new QoE measurement session may not be started. However, the UE may continue to maintain an ongoing QoE measurement session (e.g., unless a QoE configuration is requested from the base station).

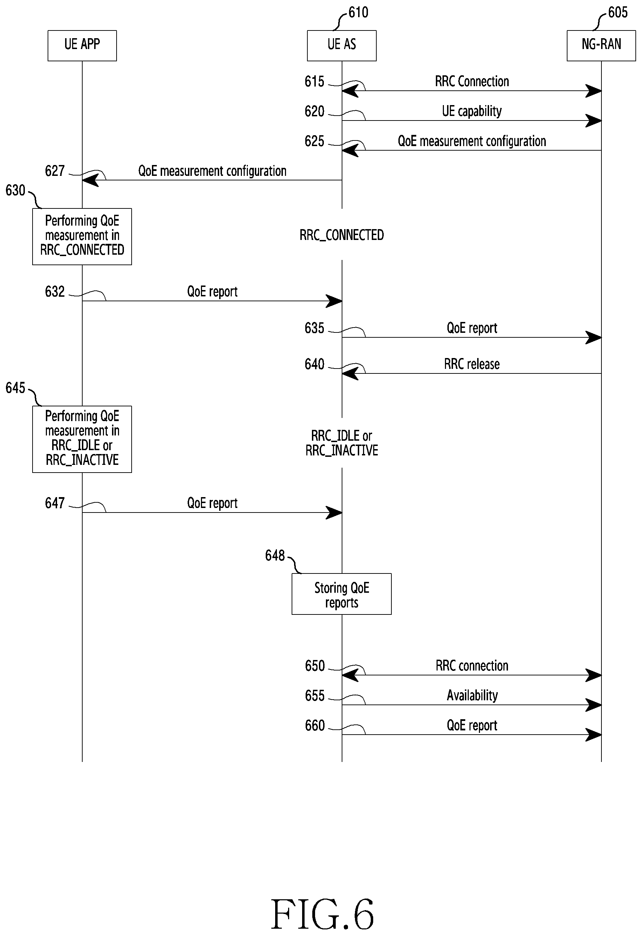

FIG. 6 is a flowchart illustrating a configuration and reporting procedure for a UE to support QoE measurement not only in a connected mode but also in an inactive mode and an idle mode according to an embodiment of the disclosure.

3GPP standardized support for QoE measurement in a connected mode in Release 17. By extending this, 3GPP is in the process of standardizing, in Release 18, a method for supporting QoE measurement not only in a connected mode (RRC_CONNECTED) but also in an inactive mode (RRC_INACTIVE) and an idle mode (RRC_IDLE) in order to support QoE measurement for a multicast broadcast service (MBS) service. For the multicast broadcast service (MBS) service, a QoE configuration/measurement/reporting procedure between a UE and a base station not only in a connected mode (RRC_CONNECTED) but also in an inactive mode (RRC_INACTIVE) and an idle mode (RRC_IDLE) may be as follows.

In operation 615, a base station 605 and a UE AS 610 may establish (or set up) an RRC connection.

In operation 620, the base station may transmit a UE capability request message (e.g., UECapabilityEnquiry) to the UE, and the UE that has received the UE capability request message may transmit a UE capability message (e.g., UECapabilityInformation) to the base station. The UE may transmit the UE capability message including an indicator for QoE measurement-related support capability. For example, the UE may transmit, to the base station, whether QoE measurement is supported for an MBS (e.g., broadcast) service. For example, the UE may transmit, to the base station, whether QoE measurement is supported not only in a connected mode (RRC_CONNECTED) but also in an inactive mode (RRC_INACTIVE) and an idle mode (RRC_IDLE). Operation 620 may correspond to operation 425 or operation 310.

In operations 625 and 627, the base station may provide QoE configuration information to the UE. Operation 625 may correspond to operation 420 and operation 430, or operation 340 and operation 350. For example, the QoE configuration information may include QoE measurement configuration information for an MBS (e.g., broadcast) service. For example, the QoE configuration information may include configuration information for QoE measurement not only in a connected mode (RRC_CONNECTED) but also in an inactive mode (RRC_INACTIVE) and an idle mode (RRC_IDLE).

In operation 630, while a UE AS is in a connected mode state, the UE APP may perform QoE measurement for an MBS service by using the QoE configuration information (e.g., when an MBS service is received).

In operation 632, the UE APP may transfer a QoE measurement result or a measurement report for the MBS service to a UE AS layer. Operation 632 may correspond to operation 355 or operation 435.

In operation 635, the UE AS may report, to the base station, the QoE measurement report received from the UE APP layer. For example, when the UE is in a connected mode state and the base station has configured SRB (SRB4 or SRB5) for QoE measurement reporting, the UE may immediately report the QoE measurement report to the base station. Operation 635 may correspond to operation 360 or operation 440.

In operation 640, the base station may transmit an RRC release message to the UE, and the UE that has received the RRC release message may transition to an inactive mode or an idle mode. The UE may also receive an MBS service in an inactive mode or an idle mode.

In operation 645, while receiving an MBS service in a state in which the AS is in an inactive mode or an idle mode, the UE APP may perform QoE measurement therefor (by using the QoE configuration information received in operation 625).

In operation 647, the UE APP may transfer a QoE measurement result or a measurement report generated through QoE measurement to the UE AS.

In operation 648, since the UE AS is in an inactive mode or an idle mode, the UE AS may store the QoE measurement report without immediately transmitting the QoE measurement report to the base station. For example, the UE APP may transfer the generated QoE measurement report to the UE AS, and the UE AS may store the generated QoE measurement report.

In operation 650, the UE may establish (or set up) an RRC connection with a (new) base station (e.g., RRC setup or RRC resume).

In operation 655, when establishing the RRC connection in operation 650, the UE may indicate, to the base station through an RRCSetupComplete message or an RRCResumeComplete message, that the UE is storing a QoE measurement report (e.g., measured in an inactive mode/idle mode) (e.g., availability).

In operation 660, a base station that has received the availability may allow QoE measurement reporting of the UE by configuring an SRB (e.g., SRB4 or SRB5) for transmission of a QoE measurement report, and the UE may perform QoE measurement reporting.

As an embodiment of the disclosure, a UE may transition to an idle mode in operation 640. The UE that has transitioned to the idle mode may store/maintain a QoE configuration even in the idle mode in order to perform MBS QoE measurement (operation 645). However, when the UE establishes an RRC connection with a new base station (operation 650), the base station may not have an MBS QoE configuration that the UE has. Therefore, the base station may need to retrieve the QoE configuration of the UE. The base station may retrieve the QoE configuration of the UE from the UE or an AMF (CN). In a method (a UE-based solution) in which a base station retrieves QoE configuration information from a UE, the UE may store QoE configuration information previously provided by a base station (operation 625) and, after passing through an idle mode, may transfer the stored QoE configuration information to a new base station after establishing an RRC connection (operation 650) with the new base station. In a method (a CN-based solution) in which a base station retrieves QoE configuration information from a CN, the CN may store QoE configuration information and, after the UE establishes an RRC connection (operation 650) with a new base station after passing through an idle mode, the CN may transfer the QoE configuration information to the new base station. Each QoE configuration information of the UE retrieved by the new base station may include some or all of the following.
- QoE reference
- a TCE, MCE address, or ID
- an RRC level QoE configuration ID (e.g., measConfigAppLayerId)
- a service type
- a QoE measurement type (whether it is a signaling-based QoE configuration or a management-based QoE configuration)
- available RAN-visible QoE indicator information
- area information capable of performing or starting new QoE measurement.

By retrieving the information, or by obtaining information on the QoE configuration configured for the UE, the new base station may add/change/release QoE configuration of the UE thereafter, and may transfer a QoE measurement report received from the UE to a correct TCE/MCE.

A first issue to be solved by the disclosure is as follows. When a UE in an idle mode establishes an RRC connection with a new base station (operation 650), the UE may indicate, to the base station, that the UE stores a QoE measurement report (e.g., a report measured in an idle mode) (e.g., availability) through an RRCSetupComplete message (operation 655). In addition, when a UE-based solution is used, the UE may provide an MBS QoE configuration to the base station. However, the base station may be a base station that does not support MBS QoE measurement (or QoE measurement in an inactive/idle mode). For example, an MBS QoE measurement function (or a QoE measurement function in an inactive/ idle mode) is a technology introduced in Release 18, and a Release 17 base station may not support the function. In addition, even a Release 18 base station may not support the function. Alternatively, even if the base station supports MBS QoE measurement (or QoE measurement in an inactive/idle mode), the base station may not need such information. In such a case, providing the MBS QoE configuration from the UE to the base station may result in waste of radio resources and UE energy. This is because a base station that does not support or does not need MBS QoE measurement (or QoE measurement in an inactive/idle mode) may not understand or use the MBS QoE configuration provided by the UE. In addition, since the MBS QoE configuration provided by the UE to the base station may include various types of information as listed above, the size of the information may be large, and accordingly, waste of radio resources and UE energy may increase.

To resolve the above issue, according to an embodiment of the disclosure, the base station may indicate some or all of the following information to the UE.
- Whether the base station supports Release 18 QoE measurement.
- Whether the base station supports MBS QoE measurement.
- Whether the base station supports QoE measurement in an inactive/idle mode.
- Whether transmission of an MBS QoE configuration of the UE is allowed.
- Whether transmission of an inactive/idle mode QoE configuration of the UE is allowed.
- Whether retrieval of an MBS QoE configuration of the base station is requested.
- Whether retrieval of an inactive/idle mode QoE configuration of the base station is requested.

For example, when the base station transmits, to the UE, a message in which the indicator (e.g., indicator A) is included or the indicator is configured as "true", this may refer to support, transmission permission, or a retrieval request. The UE having received the message may transmit an MBS QoE configuration (or a QoE configuration in an inactive/idle mode) to the base station. On the contrary, when the base station transmits, to the UE, a message in which the indicator (e.g., indicator A) is not included or is configured as "false", this may refer to lack of support, prohibition of transmission, or no request for retrieval. The UE having received the message may not transmit an MBS QoE configuration (or a QoE configuration in an inactive/idle mode) to the base station. Through this, unnecessary waste of radio resources and unnecessary energy consumption of the UE may be prevented.

According to an embodiment of the disclosure, the indicator A may be included in an RRCSetup message (operation 650) or a system information message (SIB, which may be received before transition to a connected mode). In this case, when the base station transmits, to the UE, a message in which the indicator A is not included or is configured as "false", the UE may not only refrain from transmitting an MBS QoE configuration (or a QoE configuration in an inactive/idle mode) to the base station, but may also refrain from transmitting an availability indicator. This is because a base station that does not support (or QoE measurement in an inactive/idle mode), or does not require MBS QoE measurement, may not need the availability indicator.

According to an embodiment of the disclosure, the indicator A may be defined in an RRCReconfiguration message or a UEInformationRequest message.

A second issue to be solved by the disclosure is as follows. In operation 650, a UE in an inactive mode or an idle mode may transition to a connected mode while maintaining MBS QoE measurement or configuration (or QoE measurement or configuration in an inactive/idle mode). In the case of a UE in an inactive mode, the base station may restore an MBS QoE configuration (or a QoE configuration in an inactive/idle mode) for the UE. In the case of a UE in an idle mode, the base station may also retrieve/restore an MBS QoE configuration (or a QoE configuration in an inactive/idle mode) for the UE through a UE-based solution or a CN-based solution. However, if the base station does not support or does not need MBS QoE measurement (or QoE measurement in an inactive/idle mode), the base station may not be able to retrieve or restore the MBS QoE configuration (or the QoE configuration in an inactive/idle mode) for the UE. Nevertheless, since the UE has the MBS QoE configuration (or the QoE configuration in an inactive/idle mode), the UE may perform QoE measurement and report a QoE measurement result to the base station. Since such QoE measurement and reporting may be unnecessary for a base station that does not support or does not need MBS QoE measurement (or QoE measurement in an inactive/idle mode), such QoE measurement and reporting by the UE may result in waste of UE energy and radio resources.

To resolve the above issue, according to a first embodiment of the disclosure, when the UE receives, from the base station, a message in which the indicator A is not included or is configured as "false" (e.g., indicating that the base station does not support or does not need MBS QoE measurement or QoE measurement in an inactive/idle mode), the UE may release or delete the MBS QoE measurement configuration (or the QoE measurement configuration in an inactive/idle mode) that the UE has retained. Through this, the UE may no longer perform MBS QoE measurement (or QoE measurement in an inactive/idle mode) and may not perform QoE measurement reporting to the base station. Through this, the UE and the base station may have the same QoE configuration.

To resolve the above issue, according to a second embodiment of the disclosure, when the UE receives, from the base station, a message in which the indicator A is not included or is configured as "false" (e.g., indicating that the base station does not support or does not need MBS QoE measurement or QoE measurement in an inactive/idle mode), the UE may maintain MBS QoE measurement (or QoE measurement in an inactive/idle mode) and the configuration, but may not transmit a QoE report generated therefrom to the base station. Instead, the UE may store a QoE report generated as a result of QoE measurement. In this case, the UE and the base station may not have the same QoE configuration (because the base station may not be able to hold/retrieve the MBS QoE configuration). Problems caused thereby and solutions thereto will be described later. However, the UE may continuously perform MBS QoE measurement (or QoE measurement in an inactive/idle mode) even when connected to a new cell or base station, and may store QoE measurement reports (even if immediate reporting is not possible) and later transmit the same when the UE establishes an RRC connection with another base station that supports or needs MBS QoE measurement. As a result, a TCE/a MCE that collects QoE measurement results may collect QoE measurement reports measured without interruption and may use the same for network optimization. The QoE measurement report stored as described above may be a measurement report stored by the UE in a connected mode, and the measurement report may be stored together in a memory used by the UE for storing QoE measurement reports (operation 648) in an inactive/idle mode.

The two embodiments assume not only a case in which a UE in an idle mode transitions to a connected mode, but also a case in which a UE in an inactive mode transitions to a connected mode. Accordingly, the indicator A may be used not only when the UE in the idle mode transitions to a connected mode, but also when the UE in the inactive mode transitions to a connected mode. Accordingly, according to an embodiment of the disclosure, the indicator A may be defined not only in an RRCSetup message (operation 650) but also in an RRCResume message (operation 650).

In the second embodiment, the UE maintains the MBS QoE configuration, but the base station is not able to hold/retrieve the configuration. As a result, the following issues may occur. The base station may be unaware of an ID (e.g., measConfigAppLayerId) of the MBS QoE configuration held by the UE, and when the base station needs to configure a new QoE configuration for the UE from an OAM or a CN, a duplicated ID may be configured.

For example, the UE may establish an RRC connection with the base station in operation 650, and may retain/maintain MBS QoE configuration 1 (measConfigAppLayerId=1) and MBS QoE configuration 2 (measConfigAppLayerId=2), which were retained/measured in an inactive/idle mode, and may perform measurement. However, a base station with which the UE newly establishes a connection may not support Release-18 MBS QoE measurement, and may support only Release 17 connected mode QoE measurement. In this case, the base station may be unaware that the UE has MBS QoE configuration 1 (measConfigAppLayerId=1) and MBS QoE configuration 2 (measConfigAppLayerId=2), and may configure the UE with a Release 17 connected mode QoE configuration, in which measConfigAppLayerId is configured as 1. That is, duplication/collision of a QoE configuration ID (=1) may occur.

In this case, the UE may have two different QoE configurations for one measConfigAppLayerId=1, or may overwrite MBS QoE configuration 1 with a Release 17 connected mode QoE configuration. In the former case, an issue may occur in which measConfigAppLayerId cannot function as an ID for distinguishing QoE configurations. In the latter case, an issue may occur in which MBS QoE configuration 1 is removed or released without an instruction from an OAM.

As another issue related to the second embodiment, the maximum number of QoE configurations that can be simultaneously configured for the UE is limited, but the base station may be unaware of the number of QoE configurations configured for the UE and may provide a new QoE configuration to the UE so that the UE has more QoE configurations than the limited number. In this case, the UE may overwrite some QoE configurations, thereby causing an issue in which existing QoE configurations are lost/released without an instruction from an OAM.

In order to resolve the above issue, according to an embodiment of the disclosure, a new QoE ID (e.g., measConfigAppLayerIdExt) may be introduced in addition to a legacy QoE ID (e.g., measConfigAppLayerId). The new QoE ID may be defined in an RRC QoE configuration (e.g., MeasConfigAppLayer). When configuring QoE for MBS QoE (or inactive/idle mode QoE), a base station may include the new QoE ID in an RRC QoE configuration (e.g., MeasConfigAppLayer) (indicating a single value) and provide the same to a UE. When configuring connected mode QoE (e.g., Release 17 QoE), the base station may not include the new QoE ID in the RRC QoE configuration (e.g., MeasConfigAppLayer). When the new QoE ID is included, the UE may ignore the legacy QoE ID. For a QoE configuration, the legacy QoE ID and the new QoE ID may be defined with different ranges of configuration values. For example, the legacy QoE ID may be indicated by an integer value between 1 and 16 (inclusive), and the new QoE ID may be indicated by an integer value between 17 and 24 (inclusive). Through this, for example, even when a UE has an MBS QoE configuration 1 (measConfigAppLayerIdExt = 17) and an MBS QoE configuration 2 (measConfigAppLayerIdExt = 18), and a base station is unaware of the same and configures a Release 17 connected mode QoE configuration (measConfigAppLayerId = 1), duplication or collision of IDs does not occur. As in the above example (where the range of the new QoE ID is from 17 to 24 (inclusive)), the number (e.g., eight) of MBS QoE (or inactive/idle mode QoE) configurations that may be simultaneously configured for the UE may be limited.

According to another embodiment of the disclosure, for a QoE configuration, a legacy QoE ID and a new QoE ID may be defined to have different value ranges that overlap with each other. For example, when a UE has an MBS QoE configuration 1 (measConfigAppLayerIdExt = 1) and an MBS QoE configuration 2 (measConfigAppLayerIdExt = 2), although a base station, without being aware that the UE has the configurations, configures a Release 17 connected mode QoE configuration (measConfigAppLayerId = 1), the UE may determine that the ID 1 configured by measConfigAppLayerIdExt and the ID 1 configured by measConfigAppLayerId correspond to different QoE configurations, and may manage the two as separate QoE configurations without overwriting (including storing the QoE configurations, delivering the configurations to a UE APP, and performing measurement and reporting).

According to the above embodiment, when a new QoE ID (e.g., measConfigAppLayerIdExt) is introduced, the new QoE ID (e.g., measConfigAppLayerIdExt) may be defined/used, instead of the legacy QoE ID, not only in signaling between a base station and a UE AS in which the legacy QoE ID is defined/used (e.g., operations 340 and 360), but also in signaling between the UE AS and a UE APP (e.g., operations 350 and 1c55).

According to another embodiment of the disclosure, without introducing a new QoE ID, the following UE operation may be defined. When a UE receives, from a base station, a new QoE configuration (e.g., a connected mode QoE configuration, or a QoE configuration in which an indicator indicating applicability in an inactive/idle mode is not included or is configured as false), and the QoE configuration ID is the same as that of an MBS QoE configuration held by the UE (e.g., a QoE configuration applicable in an inactive/idle mode, a QoE configuration in which an indicator indicating applicability in an inactive/idle mode is included or configured as true) (i.e., when an ID collision occurs), the UE, even if the legacy QoE IDs are the same, may distinguish the two QoE configurations as a connected mode QoE configuration and QoE configuration applied in an inactive/idle mode (e.g., based on whether an indicator indicating applicability in an inactive/idle mode is included or a configured value thereof), and may manage the configurations (e.g., storing QoE configuration storage, delivering the configurations to a UE APP, and performing measurement and reporting).

The UE AS may deliver, together with each QoE configuration, a specific indicator (e.g., an indicator indicating whether the configuration is applicable in an inactive/idle mode) to the UE APP so that the UE APP may distinguish between two QoE configurations having the same QoE ID. When delivering a QoE measurement report to the UE AS, the UE APP may deliver, together with each QoE report, a specific indicator (e.g., an indicator indicating whether the configuration is applicable in an inactive/idle mode) so as to distinguish between two QoE configurations having the same QoE ID. When reporting QoE measurement to a base station, the UE AS may transmit, together with each QoE report, a specific indicator (e.g., an indicator indicating whether the configuration is applicable in an inactive/idle mode) so as to distinguish between two QoE configurations having the same QoE ID.

According to an embodiment of the disclosure, when a UE receives, from a base station, a new QoE configuration (e.g., a connected mode QoE configuration, a QoE configuration in which an indicator indicating applicability in an inactive/idle mode is not included or is configured as false), if a QoE configuration ID of an MBS QoE configuration retained by the UE (e.g., a QoE configuration applicable in an inactive/idle mode, a QoE configuration in which an indicator indicating applicability in an inactive/idle mode is included or configured as true) is the same (in case of an ID collision), the UE may ignore the new QoE configuration (e.g., the connected mode QoE configuration) and operate as if the new QoE configuration has not been received, to avoid configuring a duplicated ID.

According to an embodiment of the disclosure, a UE may perform the following procedures. A UE may perform some of the following procedures with some operations being changed, omitted, or rearranged in sequence, or may perform the procedures by including additional operations not described below.
1) The UE may perform some or all of procedures from operation 615 to operation 648. Among them, an operation of a operation indicated below may be additionally included.
   A. In operation 625, a UE AS may receive a QoE configuration from a base station (e.g., gNB1), and the QoE configuration may include an MBS QoE configuration (or an inactive/idle mode QoE configuration) including a new QoE ID.
   B. In operation 627, the UE AS may transfer an MBS QoE configuration (or an inactive/idle mode QoE configuration) and a new QoE ID to a UE APP.
   C. In operation 632, when transmitting a QoE measurement report generated by an MBS QoE configuration (or an inactive/idle mode QoE configuration) to the UE AS, the UE APP may transmit the QoE measurement report including a new QoE ID.
   D. In operation 635, the UE AS may transmit the received QoE measurement report and the new QoE ID to the base station.
   E. In operation 647, when transmitting a QoE measurement report generated by the MBS QoE configuration (or the inactive/idle mode QoE configuration) to the UE AS, the UE APP may transmit the QoE measurement report including the new QoE ID.
   F. In operation 648, the UE AS may store a received QoE measurement report and a new QoE ID.
2) The UE may have transitioned to an inactive/idle mode in operation 640.
   A. In a case where the UE has transitioned to an inactive mode in operation 640, the UE may perform an RRC connection resume procedure with a new base station (e.g., gNB2) in operation 650.
      i. The UE may receive, from gNB2, a configuration in which the indicator A is included or indicated as "true". This may be received through a system information block (SIB) or an RRCResume message or an RRCReconfiguration message, and may be received as a part of the RRC connection resume procedure (e.g., in a case of RRCResume), or may be received before the RRC connection resume procedure (e.g., in a case of SIB), or may be received after the RRC connection resume procedure (e.g., in a case of RRCReconfiguration).
         1. When the UE receives a configuration in which the indicator A is included or indicated as "true" from a base station (e.g., gNB2), the UE may transmit a QoE measurement report (e.g., measured or generated in a connected mode) to the base station (e.g., gNB2).
      ii. The UE may receive a configuration in which the indicator A is not included or is indicated as "false" from gNB2. This configuration may be received through a SIB, an RRCResume message, or an RRCReconfiguration message, and may be received as part of an RRC connection resume procedure (e.g., in a case of RRCResume), before the RRC connection resume procedure (e.g., in a case of SIB), or after the RRC connection resume procedure (e.g., in a case of RRCReconfiguration).
         1. When the UE receives a configuration in which the indicator A is not included or is indicated as "false" from a base station (e.g., gNB2), the UE may release a corresponding MBS QoE (or inactive/idle mode QoE) configuration and stop corresponding QoE measurement and reporting.
         2. Alternatively, when the UE receives a configuration in which the indicator A is not included or is indicated as "false" from a base station (e.g., gNB2), the UE may maintain the corresponding MBS QoE (or inactive/idle mode QoE) configuration and continue corresponding QoE measurement. A UE APP may transfer a QoE measurement report generated accordingly, together with a new QoE ID, to a UE AS, and the UE AS may store the QoE measurement report together with the new QoE ID. In this case, even though the UE AS is in a connected mode state, the UE AS may store the QoE measurement report and the new QoE ID by using a memory for storing MBS QoE (or inactive/idle mode QoE) measurement reports in an inactive/idle mode.
   B. Alternatively, when the UE has transitioned to an idle mode in operation 640, the UE may perform an RRC connection setup procedure with a new base station (e.g., gNB2) in operation 650.
      i. The UE may receive a configuration in which the indicator A is included or indicated as "true" from gNB2. This configuration may be received through a SIB, an RRCSetup message, or an RRCReconfiguration message, and may be received as part of an RRC connection setup procedure (e.g., in a case of RRCSetup), before the RRC connection setup procedure (e.g., in a case of SIB), or after the RRC connection setup procedure (e.g., in a case of RRCReconfiguration).
         1. When the UE receives a configuration in which the indicator A is included or indicated as "true" from a base station (e.g., gNB2), the UE may transmit an MBS QoE (or inactive/idle mode QoE) configuration to the base station (e.g., through a MeasurementReportAppLayer message or a UEInformationResponse message), such that the base station may retrieve the MBS QoE configuration (or the inactive/idle mode QoE configuration).
         2. When the UE receives a configuration in which the indicator A is included or indicated as "true" from a base station (e.g., gNB2), the UE may transmit a QoE measurement report (e.g., measured or generated in a connected mode) to the base station (e.g., gNB2).
      ii. The UE may receive a configuration in which the indicator A is not included or is indicated as "false" from gNB2. This configuration may be received through a SIB, an RRCSetup message, or an RRCReconfiguration message, and may be received as part of an RRC connection setup procedure (e.g., in a case of RRCSetup), before the RRC connection setup procedure (e.g., in a case of SIB), or after the RRC connection setup procedure (e.g., in a case of RRCReconfiguration).
         1. When a UE receives a configuration in which the indicator A is not included or is indicated as "false" from a base station (e.g., gNB2), the UE may not transmit an MBS QoE (or inactive/idle mode QoE) configuration to the base station.
         2. When a UE receives a configuration in which the indicator A is not included or is indicated as "false" from a base station (e.g., gNB2), the UE may release a corresponding MBS QoE (or inactive/idle mode QoE) configuration and stop corresponding QoE measurement and reporting.
         3. Alternatively, when a UE receives a configuration in which the indicator A is not included or is indicated as "false" from a base station (e.g., gNB2), the UE may maintain the corresponding MBS QoE (or inactive/idle mode QoE) configuration while maintaining the corresponding QoE measurement. A UE APP may transfer a QoE measurement report generated accordingly to a UE AS together with a new QoE ID, and the UE AS may store the QoE measurement report together with the new QoE ID. In this case, although the UE AS is in a connected mode state, the UE AS may store the QoE measurement report and the new QoE ID by using a memory for storing MBS QoE (or inactive/idle mode QoE) measurement reports in an inactive/idle mode.

According to an embodiment of the disclosure, for QoE measurement in a connected mode (e.g., Release 17 QoE measurement), when a UE AS receives a QoE measurement report from a UE APP (e.g., operations 355 and 435), if a base station or a network does not configure a resource (e.g., SRB4 or SRB5) for QoE measurement reporting for the UE, the UE may store the QoE measurement report in a connected mode. The UE may store the QoE measurement report in a memory (e.g., memory 1) for storing QoE measurement reports when QoE measurement reporting is temporarily paused, rather than in a memory (e.g., memory 2) for storing MBS QoE (or inactive/idle mode QoE) measurement reports in an inactive/idle mode. This is because a UE (e.g., a Release 17 UE) may not support MBS QoE (or inactive/idle mode QoE) (e.g., a Release 18 function), and therefore may not have memory 2.

According to an embodiment of the disclosure, for MBS QoE measurement (e.g., Release 18 QoE measurement), when a UE AS receives a QoE measurement report from a UE APP in a connected mode (e.g., operation 632), if a base station or a network does not configure a resource (e.g., SRB4 or SRB5) for QoE measurement reporting for the UE, the UE may store the QoE measurement report in the connected mode. The UE may store the QoE measurement report in a memory (e.g., memory 2) for storing MBS QoE (or inactive/idle mode QoE) measurement reports in an inactive/idle mode. This is because the UE may support MBS QoE (or inactive/idle mode QoE) (e.g., a Release 18 function), and thus may have memory 2.

The UE may transmit availability in operation 655. Through the availability, the UE may indicate to the base station that QoE measurement has been performed in an inactive/idle mode and that a generated QoE report has been stored. However, when a UE-based solution is used for a base station to retrieve QoE configuration information of a UE in an idle mode, the UE in the idle mode may need to transmit, to the base station, not only information indicating whether a QoE report is stored but also information indicating whether an MBS QoE (or inactive/idle mode QoE) measurement configuration is retained. This is because, even when the UE does not store a QoE measurement report, if the UE retains an MBS QoE (or inactive/idle mode QoE) measurement configuration, the base station may request retrieval of the QoE configuration or allocate a resource necessary for retrieval, and through retrieval, may add a new QoE configuration to the UE (by configuring a QoE ID that does not overlap with a QoE ID retained by the UE), or change or release a QoE configuration retained by the UE.

To this end, according to an embodiment of the disclosure, in operation 655, when 1) an (idle-mode) UE stores a QoE report or 2) the UE holds an MBS QoE (or inactive/idle mode QoE) measurement configuration, the UE may transmit, to a base station, a message in which an availability indicator is included or configured as "true" (e.g., through an RRCSetupComplete message).

However, in the above embodiment, for example, since the base station uses a single availability indicator in common for both 1) the case in which the UE stores a QoE report and 2) the case in which the UE holds an MBS QoE (or inactive/idle mode QoE) measurement configuration, the base station may not be able to distinguish between the following two cases.
- Case 1) The UE holds an MBS QoE (or inactive/idle mode QoE) measurement configuration, and the UE also stores a QoE measurement report.
- Case 2) The UE holds an MBS QoE (or inactive/idle mode QoE) measurement configuration, but does not store a QoE measurement report.

In both cases, since the (idle-mode) UE includes the availability indicator or configures the indicator as "true" and transmits the same to the base station (e.g., through RRCSetupComplete), the base station that has received the same may not be able to distinguish whether the UE is in Case 1 or Case 2. The base station may perform different operations for each case. For example, in Case 1, since there is no QoE measurement report to be collected immediately, the base station may not configure SRB4 for the UE. On the other hand, in Case 2, the base station may configure SRB4 for collecting a QoE measurement report, and may perform additional resource configuration or related operations (e.g., a QoE configuration collection request) for collecting the QoE configuration.

To solve the above issue, according to an embodiment of the disclosure, in operation 655, 1) when an (idle-mode) UE stores a QoE report, the UE includes an availability indicator 1 or configures the availability indicator 1 as "true", and 2) when the UE holds an MBS QoE (or inactive/idle-mode QoE) measurement configuration, the UE includes an availability indicator 2 (which is separate from the availability indicator 1), or configures the availability indicator 2 as "true", and transmits the same to the base station (for example, via RRCSetupComplete). Conversely, in operation 655, 1) when the (idle-mode) UE does not store a QoE report, the UE does not include the availability indicator 1 or configures the availability indicator 1 as "false", and (2) when the UE does not hold the MBS QoE (or inactive/idle-mode QoE) measurement configuration, the UE does not include the availability indicator 2 (which is separate from the availability indicator 1), or configures the availability indicator 2 as "false", and transmits the same to the base station (for example, via RRCSetupComplete).

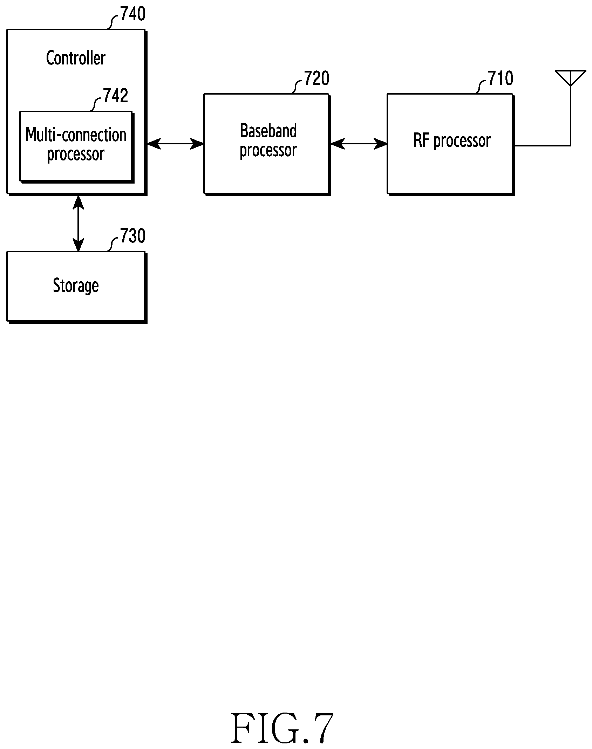

FIG. 7 is a block diagram illustrating an internal structure of a UE, which is applied to embodiments of the disclosure.

Referring to FIG. 7, the UE includes a radio frequency (RF) processor 710, a baseband processor 720, a storage 730, and a controller 740.

The RF processor 710 may perform functions for transmitting/receiving signals through a radio channel, such as signal band conversion and amplification. That is, the RF processor 710 may up-convert a baseband signal provided from the baseband processor 720 to an RF band signal, may transmit the same through an antenna, and may down-convert an RF band signal received through the antenna to a baseband signal. For example, the RF processor 710 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 710 may include multiple RF chains. Furthermore, the RF processor 710 may perform beamforming. For the beamforming, the RF processor 710 may adjust the phase and magnitude of signals transmitted/received through multiple antennas or antenna elements, respectively. In addition, the RF processor may perform MIMO, and may receive multiple layers when performing an MIMO operation.

The baseband processor 720 may perform functions of conversion between baseband signals and bitstrings according to the system's physical layer specifications. For example, during data transmission, the baseband processor 720 may encode and modulate a transmitted bitstring to generate complex symbols. In addition, during data reception, the baseband processor 720 may demodulate and decode a baseband signal provided from the RF processor 710 to restore a received bitstring. For example, when following the orthogonal frequency division multiplexing (OFDM) scheme, during data transmission, the baseband processor 720 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 720 may split a baseband signal provided from the RF processor 710 at the OFDM symbol level, may restore signals mapped to subcarriers through a fast Fourier transform (FFT) operation, and may restore a received bitstring through demodulation and decoding.

The baseband processor 720 and the RF processor 710 transmit and receive signals as described above. Therefore, the baseband processor 720 and the RF processor 710 may be referred to as a transmitter, a receiver, a transceiver, or a communication unit. Furthermore, at least one of the baseband processor 720 and the RF processor 710 may include multiple communication modules to support multiple different radio access technologies. In addition, at least one of the baseband processor 720 and the RF processor 710 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

The storage 730 may store basic programs, application programs, and data, such as configuration information, for the operation of the UE. Particularly, the storage 730 may store information related to a second access node configured to perform wireless communication by using a radio access technology. In addition, the storage 730 provides the stored data at the request of the controller 740.

The controller 740 controls the overall operation of the UE. For example, the controller 740 transmits/receives signals through the baseband processor 720 and the RF processor 710. In addition, the controller 740 records data in the storage 730 and reads the data from the storage 730. To this end, the controller 740 may include at least one processor. For example, the controller 740 may include a communication processor (CP) that performs control for communication and an application processor (AP) that controls upper layers such as application programs, and may include a multi-connectivity processor 742 as illustrated in the drawing.

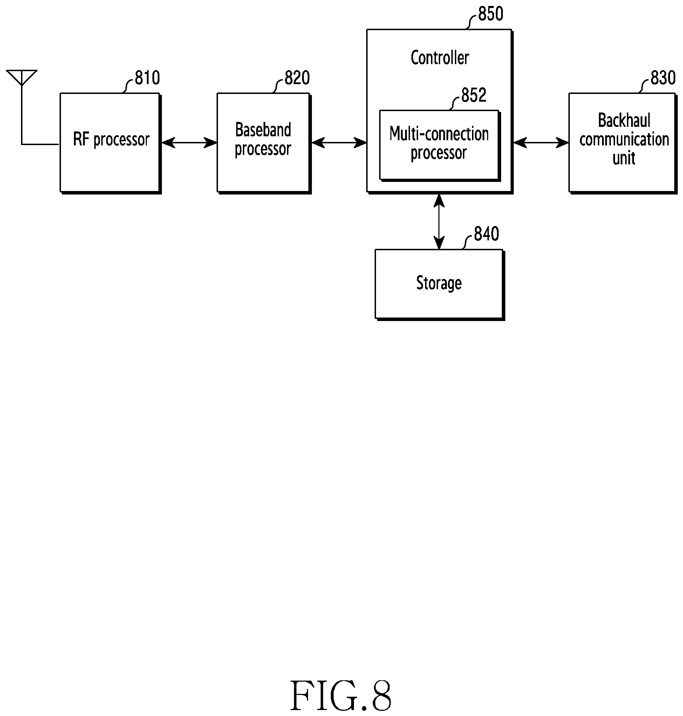

FIG. 8 is a block diagram illustrating a structure of a base station, which is applied to embodiments of the disclosure.

Referring to FIG. 8, the base station includes an RF processor 810, a baseband processor 820, a backhaul communication unit 830, a storage 840, and a controller 850.

The RF processor 810 may perform functions for transmitting/receiving signals through a radio channel, such as signal band conversion and amplification. That is, the RF processor 810 may up-convert a baseband signal provided from the baseband processor 820 to an RF band signal, may transmit the same through an antenna, and may down-convert an RF band signal received through the antenna to a baseband signal. For example, the RF processor 810 may include a transmission filter, a reception filter, an amplifier, a mixer, an oscillator, a DAC, and an ADC. Although only one antenna is illustrated in the drawing, the UE may include multiple antennas. In addition, the RF processor 810 may include multiple RF chains. Furthermore, the RF processor 810 may perform beamforming. For the beamforming, the RF processor 810 may adjust the phase and magnitude of signals transmitted/received through multiple antennas or antenna elements, respectively. The RF processor may transmit one or more layers to perform a downward MIMO operation.

The baseband processor 820 may perform functions of conversion between baseband signals and bitstrings according to the physical layer specifications of a first radio access technology. For example, during data transmission, the baseband processor 820 may encode and modulate a transmitted bitstring to generate complex symbols. In addition, during data reception, the baseband processor 820 may demodulate and decode a baseband signal provided from the RF processor 810 to restore a received bitstring. For example, when following the OFDM scheme, during data transmission, the baseband processor 820 may encode and modulate a transmitted bitstring to generate complex symbols, may map the complex symbols to subcarriers, and may configure OFDM symbols through IFFT operation and CP insertion. In addition, during data reception, the baseband processor 820 may split a baseband signal provided from the RF processor 810 at the OFDM symbol level, may restore signals mapped to subcarriers through FFT operation, and may restore a received bitstring through demodulation and decoding. The baseband processor 820 and the RF processor 810 transmit and receive signals as described above. Therefore, the baseband processor 820 and the RF processor 810 may be referred to as a transmitter, a receiver, a transceiver, or a communication unit.

The backhaul communication unit 830 provides an interface for communicating with other nodes in the network. That is, the backhaul communication unit 830 converts bitstrings transmitted from the main base station to other nodes, for example, an auxiliary base station, a core network, etc., into physical signals, and converts physical signals received from the other nodes into bitstrings.

The storage 840 stores basic programs, application programs, and data, such as configuration information, for operation of the main base station. Particularly, the storage 840 may store information regarding a bearer allocated to a connected UE, a measurement result reported from the connected UE, and the like. In addition, the storage 840 may store information serving as a criterion to determine whether to provide multi-connectivity to a UE or to suspend the same. In addition, the storage 840 provides the stored data at the request of the controller 850.

The controller 850 controls the overall operation of the main base station. For example, the controller 850 transmits/receives signals through the baseband processor 820 and the RF processor 810 or through the backhaul communication unit 830. In addition, the controller 850 records data in the storage 840 and reads the data from the storage 840. To this end, the controller 850 may include at least one processor, and may include a multi-connectivity processor 852 as illustrated in the drawing. The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may also be applied to other communication systems and other variants based on the technical idea of the embodiments may also be implemented. For example, the embodiments may be applied to LTE, 5G, NR, or 6G systems. Therefore, the scope of the disclosure should not be defined as being limited to the embodiments set forth herein, but should be defined by the appended claims and equivalents thereof.

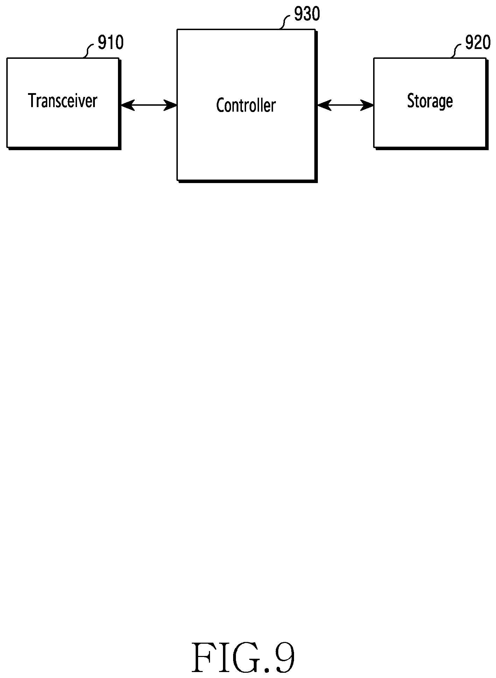

FIG. 9 illustrates a structure of a UE according to an embodiment of the disclosure.

As illustrated in FIG. 9, the UE of the disclosure may include a controller (control unit) 930, a transceiver 910, and a storage (memory) 920. However, components of the UE are not limited to the above-described example. For example, the UE may include a larger or smaller number of components than the above-described components. In addition, the controller 930, the transceiver 910, and the storage 920 may be implemented in the form of a single chip. According to an embodiment, the controller 930 of FIG. 9 may include at least one processor or controller.

According to an embodiment, the controller 930 may control a series of processes so that the UE can operate according to the above-described embodiments of the disclosure. For example, according to an embodiment of the disclosure, the controller 930 may control the components of the UE to perform transmission and reception methods of the UE according to whether the base station mode is a base station energy saving mode or a base station normal mode. The controller 930 may include one or multiple controllers, and the controller 930 may execute programs stored in the storage 920 to perform transmission and reception operations of the UE in a wireless communication system employing the above-described carrier aggregation of the disclosure.

The transceiver 910 may transmit/receive signals with base stations. The signals transmitted/received with base stations may include control information and data. To this end, the transceiver 910 may include an RF transmitter configured to up-convert and amplify the frequency of transmitted signals, an RF receiver configured to low-noise-amplify received signals and down-convert the frequency thereof, and the like. However, this is only an embodiment of the transceiver 910, and the components of the transceiver 910 are not limited to the RF transmitter and the RF receiver. In addition, the transceiver 910 may receive signals through a radio channel, output the same to the controller 930, and transmit signals output from the controller 930 through the radio channel.

According to an embodiment, the storage 920 may store programs and data necessary for operations of the UE. In addition, the storage 920 may store control information or data included in signals transmitted/received by the UE. The storage 920 may include storage media such as a ROM, a RAM, a hard disk, a CD-ROM, and a DVD, or a combination of storage media. In addition, the storage 920 may include multiple storages. According to an embodiment, the storage 920 may store programs for performing transmission and reception operations of the UE according to whether the base station mode in the above-described embodiments of the disclosure is a base station power saving mode or a base station normal mode.

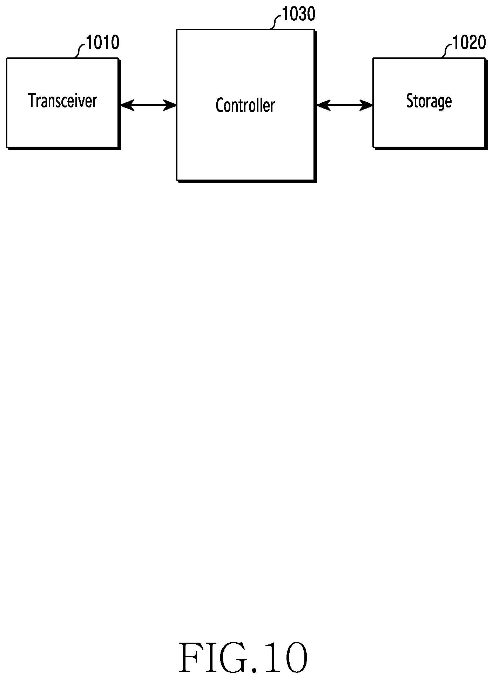

FIG. 10 illustrates a structure of a base station according to an embodiment of the disclosure.

As illustrated in FIG. 10, the base station of the disclosure may include a controller (control unit) 1030, a transceiver 1010, and a storage (memory) 1020. However, components of the base station are not limited to the above-described example. For example, the base station may include a larger or smaller number of components than the above-described components. In addition, the controller 1030, the transceiver 1010, and the storage 1020 may be implemented in the form of a single chip. The controller 1030 of FIG. 10 may include at least one processor or controller.

The controller 1030 may control a series of processes so that the base station can operate according to the above-described embodiments of the disclosure. For example, according to an embodiment of the disclosure, the controller 1030 may control the components of the base station to perform UE scheduling methods according to whether the base station mode is a base station power saving mode or a base station normal mode. The controller 1030 may include one or multiple controllers, and the controller 1030 may execute programs stored in the storage 1020 to perform UE scheduling methods according to whether the above-described base station mode is a base station power saving mode or a base station normal mode.

The transceiver 1010 may transmit/receive signals with UEs. The signals transmitted/received with UEs may include control information and data. The transceiver 1010 may include an RF transmitter configured to up-convert and amplify the frequency of transmitted signals, an RF receiver configured to low-noise-amplify received signals and down-convert the frequency thereof, and the like. However, this is only an embodiment of the transceiver 1010, and the components of the transceiver 1010 are not limited to the RF transmitter and the RF receiver. In addition, the transceiver 1010 may receive signals through a radio channel, output the same to the controller 1030, and transmit signals output from the controller 1030 through the radio channel.

According to an embodiment, the storage 1020 may store programs and data necessary for operations of the base station. In addition, the storage 1020 may store control information or data included in signals transmitted/received by the base station. The storage 1020 may include storage media such as a ROM, a RAM, a hard disk, a CD-ROM, and a DVD, or a combination of storage media. In addition, the storage 1020 may include multiple storages. According to an embodiment, the storage 1020 may store programs for performing UE scheduling methods according to whether the base station mode in the above-described embodiments of the disclosure is a base station power saving mode or a base station normal mode.

It should be noted that the above-described configuration diagrams, illustrative diagrams of control/data signal transmission methods, illustrative diagrams of operation procedures, and structural diagrams are not intended to limit the scope of the disclosure. That is, all constituent elements, entities, or operation steps described in the embodiments of the disclosure should not be construed as being essential for the implementation of the disclosure, and the disclosure may be implemented with out impairing the essential features of the disclosure by including only some constituent elements. Also, the above respective embodiments may be employed in combination, as necessary. For example, the methods proposed in the disclosure may be partially combined with each other to operate a network entity and a terminal.

The above-described operations of a base station or terminal may be implemented by providing any unit of the base station or terminal device with a memory device storing corresponding program codes. That is, a controller of the base station or terminal device may perform the above-described operations by reading and executing the program codes stored in the memory device by means of a processor or central processing unit (CPU).

Various units or modules of an entity, a base station device, or a terminal device may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits.

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing an embodiment of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof. That is, it will be apparent to those skilled in the art that other variants based on the technical idea of the disclosure may be implemented. Also, the above respective embodiments may be employed in combination, as necessary. For example, the methods proposed in the disclosure may be partially combined with each other to operate a network entity and a terminal. Moreover, although the above embodiments have been described based on 5G and NR systems, other variants based on the technical idea of the embodiments may also be implemented in other communication systems such as LTE, LTE-A, and LTE-A-Pro systems.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a terminal in a wireless communication system, the method comprising:
receiving, from a base station, a message including configuration information related to a quality of experience (QoE) measurement; and
in case that the configuration information includes indication information indicating whether transmission of a QoE measurement report collected in a radio resource control (RRC) idle state and/or an RRC inactive state is allowed and whether transmission of a QoE measurement configuration applicable to the RRC idle state and/or the RRC inactive state is allowed, transmitting, to the base station, the QoE measurement report collected in the RRC idle state and/or the RRC inactive state and/or the QoE measurement configuration applicable to the RRC idle state and/or the RRC inactive state.

2. The method of claim 1, wherein, in case that the configuration information does not include the indication information, transmission of the QoE measurement report and the QoE measurement configuration for the RRC idle state and/or the RRC inactive state is not allowed.

3. The method of claim 2, wherein, in case that the configuration information does not include the indication information:
the QoE measurement configuration applicable to the RRC idle state and/or the RRC inactive state is released,
the QoE measurement report collected in the RRC idle state and/or the RRC inactive state is discarded, and
the QoE measurement report in the RRC idle state and/or the RRC inactive state is configured not to be transmitted.

4. The method of claim 3, wherein the indication information is included in an RRC reconfiguration message or an RRC resume message.

5. A method performed by a base station in a wireless communication system, the method comprising:
transmitting, to a terminal, a message including configuration information related to a quality of experience (QoE) measurement; and
in case that the configuration information includes indication information indicating whether transmission of a QoE measurement report collected in a radio resource control (RRC) idle state and/or an RRC inactive state is allowed and whether transmission of a QoE measurement configuration applicable to the RRC idle state and/or the RRC inactive state is allowed, receiving, from the terminal, the QoE measurement report collected in the RRC idle state and/or the RRC inactive state and/or the QoE measurement configuration applicable to the RRC idle state and/or the RRC inactive state.

6. The method of claim 5, wherein, in case that the configuration information does not include the indication information, transmission of the QoE measurement report and the QoE measurement configuration for the RRC idle state and the RRC inactive state is not allowed.

7. The method of claim 6, wherein, in case that the configuration information does not include the indication information:
the QoE measurement configuration applicable to the RRC idle state and/or the RRC inactive state is released,
the QoE measurement report collected in the RRC idle state and/or the RRC inactive state is discarded, and
the QoE measurement report in the RRC idle state and/or the RRC inactive state is configured not to be transmitted.

8. The method of claim 7, wherein the indication information is included in an RRC reconfiguration message or an RRC resume message.

9. A terminal in a wireless communication system, the terminal comprising:
a transceiver; and
a controller connected to the transceiver,
wherein the controller is configured to:
receive, from a base station, a message including configuration information related to a quality of experience (QoE) measurement; and
in case that the configuration information includes indication information indicating whether transmission of a QoE measurement report collected in a radio resource control (RRC) idle state and/or an RRC inactive state is allowed and whether transmission of a QoE measurement configuration applicable to the RRC idle state and/or the RRC inactive state is allowed, transmit, to the base station, the QoE measurement report collected in the RRC idle state and/or the RRC inactive state and/or the QoE measurement configuration applicable to the RRC idle state and/or the RRC inactive state.

10. The terminal of claim 9, wherein, in case that the configuration information does not include the indication information, transmission of the QoE measurement report and the QoE measurement configuration for the RRC idle state and the RRC inactive state is not allowed.

11. The terminal of claim 10, wherein, in case that the configuration information does not include the indication information:
the QoE measurement configuration applicable to the RRC idle state and/or the RRC inactive state is released,
the QoE measurement report collected in the RRC idle state and/or the RRC inactive state is discarded, and
the QoE measurement report in the RRC idle state and/or the RRC inactive state is configured not to be transmitted.

12. The terminal of claim 11, wherein the indication information is included in an RRC reconfiguration message or an RRC resume message.

13. A base station in a wireless communication system, the base station comprising:
a transceiver; and
a controller connected to the transceiver,
wherein the controller is configured to:
transmit, to a terminal, a message including configuration information related to a quality of experience (QoE) measurement; and
in case that the configuration information includes indication information indicating whether transmission of a QoE measurement report collected in a radio resource control (RRC) idle state and/or an RRC inactive state is allowed and whether transmission of a QoE measurement configuration applicable to the RRC idle state and/or the RRC inactive state is allowed, receive, from the terminal, the QoE measurement report collected in the RRC idle state and/or the RRC inactive state and/or the QoE measurement configuration applicable to the RRC idle state and/or the RRC inactive state.

14. The base station of claim 13, wherein, in case that the configuration information does not include the indication information, transmission of the QoE measurement report and the QoE measurement configuration for the RRC idle state and the RRC inactive state is not allowed.

15. The base station of claim 14, wherein, in case that the configuration information does not include the indication information:
the QoE measurement configuration applicable to the RRC idle state and/or the RRC inactive state is released,
the QoE measurement report collected in the RRC idle state and/or the RRC inactive state is discarded, and
the QoE measurement report in the RRC idle state and/or the RRC inactive state is configured not to be transmitted.
